# EUROPEAN PATENT APPLICATION

(11) **EP 4 825 816 A1**
(43) Date of publication of application: **21.10.2026**
(21) Application number: 24910762.4
(22) Date of filing: 12.12.2024
(51) Int. Cl.: C03C 10/04, C03C 10/12

(54) **3D CURVED SURFACE MICROCRYSTALLINE GLASS, AND CHEMICALLY STRENGTHENED MICROCRYSTALLINE GLASS, PREPARATION METHOD THEREFOR AND USE THEREOF**

(30) Priority: 25.12.2023 CN 202311801461
(71) Applicant: Chongqing Aureavia Hi-Tech Glass Co., Ltd., Chongqing 400713 (CN)
(72) Inventor: HUANG, Hao, Chongqing 400713 (CN); TIAN, Qian, Chongqing 400713 (CN); ZHOU, Jingpeng, Chongqing 400713 (CN); YANG, Yun, Chongqing 400713 (CN); LIU, Zhiqiang, Chongqing 400713 (CN); XIE, Xiaolan, Chongqing 400713 (CN); CHEN, Ying, Chongqing 400713 (CN)
(74) Representative: Vitillo, Giuseppe
(86) International application number: PCT/CN2024/138907
(87) International publication number: WO 2025/139831

(57) **Abstract**

The present disclosure belongs to the technical field of glass, and particularly relates to a 3D curved glass-ceramic, a chemically strengthened glass-ceramic, a preparation method therefor and use thereof. Based on the molar percentages of oxides, the composition of the 3D curved glass-ceramic satisfies the following: 0.180 ≤ 5 × P₂O₅ / (Li₂O + 0.5 × Al₂O₃) ≤ 0.250; 18.200 ≤ Li₂O / P₂O₅ ≤ 25.500; 0.100 ≤ P₂O₅ × (CaO + ZrO₂ + Li₂O + Al₂O₃) / (Na₂O + K₂O + B₂O₃) ≤ 2.200; 1.500 ≤ 10 × (ZrO₂ + P₂O₅) / Li₂O ≤ 2.000; and 4.000 ≤ (SiO₂ - 7 × Al₂O₃ - Li₂O) / (P₂O₅ + ZrO₂) ≤ 6.000. The present disclosure is able to ensure the generation of the main crystalline phases, and at the same time, the whole product presents a relatively uniform display effect.

## Description

### CROSS-REFERENCE TO RELATED APPLICATION

The present disclosure claims priority to Chinese Patent Application No. 202311801461.4, titled "3D CURVED SURFACE MICROCRYSTALLINE GLASS, AND CHEMICALLY STRENGTHENED MICROCRYSTALLINE GLASS, PREPARATION METHOD THEREFOR AND USE THEREOF", filed before the China National Intellectual Property Administration on December 25, 2023, which is incorporated herein by reference in its entirety.

### TECHNICAL FIELD

The present disclosure relates to the technical field of glass, in particular to a 3D curved glass-ceramic, a chemically strengthened glass-ceramic, and a preparation method therefor and use thereof.

### BACKGROUND

With the development of electronic display technology, glass has gradually replaced plastic materials and is used in display devices as a protective cover plate material. Meanwhile, with the diversified applications of electronic products, 3D curved screens such as curved-screen mobile phones and smartwatches are gradually becoming popular. Among them, 3D curved glass-ceramics have gradually attracted attention in the industry due to their superior strength performance compared with ordinary 3D curved glass.

It is difficult to mass-produce 3D curved glass-ceramics used in display screens with high requirements for optical display effects. A significant reason is that during the production of large-sized preformed glass-ceramics for preparing 3D curved glass-ceramics, it is difficult to ensure the uniformity of components and the uniformity of the temperature field. As a result, preformed glass-ceramic products with localized optical defects are prone to occur. Moreover, this problem persists after the preformed glass-ceramic undergoes hot-bending treatment, which further leads to the produced 3D curved glass-ceramic exhibiting undesired local coloration or an overall uneven display effect. In addition, the difficulty in ensuring uniformity also easily causes the preformed glass-ceramic to break into fragments during the hot-bending process.

It should be noted that the content in this part of the present disclosure only provides background information related to the present disclosure and does not necessarily constitute prior art or common general knowledge.

### SUMMARY

In order to improve the output, when a production line mass-produces 3D curved glass-ceramics with crystalline phase structures of petalite and lithium disilicate, it generally first produces large-sized base glass bricks, such as base glass bricks with a specification of length, width, and thickness of (200 mm to 500 mm) × (100 mm to 500 mm) × (10 mm to 40 mm), and then the base glass bricks are subjected to heat treatment to obtain preformed glass-ceramic products. Considering that the glass-ceramic of this system is usually accompanied by a certain degree of crystallization during the hot-bending process, the degree of crystallization of the produced preformed glass-ceramic product is generally lower than that of the final 3D curved glass-ceramic product. Then, the preformed glass-ceramic product is subjected to cold working to prepare multiple flat glass-ceramic sheets with the desired specification size. Subsequently, the obtained flat glass-ceramic sheet is subjected to hot-bending treatment to prepare the 3D curved glass-ceramic product.

However, the existing glass-ceramic scheme with petalite crystalline phase and lithium disilicate crystalline phase as the main crystalline phases is highly prone to the problem of poor optical performance of the preformed glass-ceramic brick during industrial mass production of large-sized preformed glass-ceramic products. The problems are mainly manifested in that the prepared preformed glass-ceramic bricks exhibit significant differences in b-values between different areas, undesired colors in local areas, and a tendency to uneven coloration. Such difference cannot be mitigated through subsequent hot-bending treatment. This results in significant differences in b-values between different areas of the 3D curved glass-ceramic obtained by hot-bending the preformed glass-ceramic bricks, thereby affecting the overall display effect of the 3D curved glass-ceramic, making it difficult for the prepared 3D curved glass-ceramic to meet the application requirements for display screen cover plates. Furthermore, some preformed glass-ceramic products may even break into fragments during the hot-bending process, causing a decrease in yield.

The purpose of the present disclosure is to overcome the problems of low yield in mass production, a tendency to uneven coloration, and poor display performance of 3D curved glass-ceramics, when preparing 3D curved glass-ceramic products with petalite crystalline phase and lithium disilicate crystalline phase as the main crystalline phases during mass production, as existing in the prior art, and to provide a 3D curved glass-ceramic, and a preparation method therefor and use thereof.

To achieve the above purpose, the present disclosure provides the following technical solutions:
A 3D curved glass-ceramic, wherein the 3D curved glass-ceramic comprises a petalite crystalline phase and a lithium disilicate crystalline phase, wherein the petalite crystalline phase and the lithium disilicate crystalline phase have a higher weight percentage than other crystalline phases present in the 3D curved glass-ceramic;
based on a mole percentage of oxides, a composition of the 3D curved glass-ceramic comprises:
   SiO₂: 60.00 mol% to 71.00 mol%, Al₂O₃: 1.50 mol% to 5.00 mol%, P₂O₅: 0.80 mol% to 1.50 mol%, ZrO₂:2.00 mol% to 4.00 mol%, Na₂O: 0.00 mol% to 1.00 mol%, K₂O: 0.00 mol% to 0.50 mol%, Li₂O: 20.00 mol% to 30.00 mol%, CaO: 0.00 mol% to 1.60 mol%, B₂O₃: 0.00 mol% to 1.00 mol%;
   based on contents expressed as the mole percentage of each oxide in the composition of the 3D curved glass-ceramic, the composition of the 3D curved glass-ceramic satisfies: $0.180 \leq 5 \times {P}_{2} {O}_{5} / \left({Li}_{2}O+0.5\times {Al}_{2}{O}_{3}\right) \leq 0.250 ;$ $18.200 \leq {Li}_{2} O / {P}_{2} {O}_{5} \leq 25.500 ;$ $0.100 \leq {P}_{2} {O}_{5} \times \left(CaO+{ZrO}_{2}+{Li}_{2}O+{Al}_{2}{O}_{3}\right) / \left({Na}_{2}O+{K}_{2}O+{B}_{2}{O}_{3}\right) \leq 2.200 ;$ $1.500 \leq 10 \times \left({ZrO}_{2}+{P}_{2}{O}_{5}\right) / {Li}_{2} O \leq 2.000 ;$ $4.000 \leq \left({SiO}_{2}-7\times {Al}_{2}{O}_{3}-{Li}_{2}O\right) / \left({P}_{2}{O}_{5}+{ZrO}_{2}\right) \leq 6.000 .$

By controlling the content of each oxide within a suitable range and matching ratios of the oxide contents under specific conditions, the generation of main crystalline phases can be ensured during the mass production of 3D curved glass-ceramic products. At the same time, it ensures that the prepared 3D curved glass-ceramic product exhibits a relatively uniform overall display effect, effectively avoiding the problems of significant differences in b-values between different areas and poor display performance in mass-produced 3D curved glass-ceramic products.

It should be pointed out that in the above formulas of the present disclosure, the mole percentage of the contents is substituted into each formula, meaning the mole unit does not participate in the calculation of the formula. For example, if the mole percentage of the content of P₂O₅ is 0.80%, then 0.80% is substituted into the formula for calculation.

In some embodiments, based on contents expressed as the mole percentage of each oxide in the composition of the 3D curved glass-ceramic, the composition of the 3D curved glass-ceramic satisfies: $2.600 \leq 99 \times \left(CaO+{ZrO}_{2}\right) / \left({Li}_{2}O+{Na}_{2}O+1000\times {K}_{2}O\right) \leq 5.000 ;$ $12.200 \leq \left(5.6\times {B}_{2}{O}_{3}+10\times {Al}_{2}{O}_{3}+6.5\times CaO\right) / {ZrO}_{2} \leq 20.000 .$

By further adjusting the relationships between the contents of each component, it is beneficial to ensure that the 3D curved glass-ceramic obtains excellent optical and mechanical strength performance.

In some embodiments, the 3D curved glass-ceramic is transparent within the visible light range. By making the 3D curved glass-ceramic transparent within the visible light range, it can meet the application requirements of display screens, helping to broaden the application fields and scenarios of the 3D curved glass-ceramic.

In some embodiments, based on the mole percentage of oxides, the composition of the 3D curved glass-ceramic comprises:
SiO₂: 67.50 mol% to 71.00 mol%, Al₂O₃: 3.50 mol% to 5.00 mol%, P₂O₅: equal to or greater than 0.85 mol% and less than 1.50 mol%, ZrO₂: 2.50 mol% to 3.50 mol%, Na₂O: greater than 0.00 mol% and less than or equal to 1.00 mol%, K₂O: greater than 0.00 mol% and less than or equal to 0.50 mol%, Li₂O: 20.00 mol% to 25.00 mol%, CaO: greater than 0.50 mol% and less than or equal to 1.50 mol%, B₂O₃: 0.00 mol% to 1.00 mol%.

By adjusting the content relationships of necessary oxides, it is beneficial to further improve the network structure of the 3D curved glass-ceramic, thereby helping to ensure the mass production effect of large-sized preformed glass-ceramics and the excellent optical and strength performances of the mass-produced 3D curved glass-ceramic products.

In some embodiments, the 3D curved glass-ceramic does not comprise a quartz crystalline phase. By avoiding the precipitation of quartz crystalline phase in the 3D curved glass-ceramic with petalite crystalline phase and lithium disilicate crystalline phase as the main crystalline phases, it is beneficial to ensure the optical performance and overall uniformity of the 3D curved glass-ceramic.

In some embodiments, in the 3D curved glass-ceramic, a total content of the petalite crystalline phase and the lithium disilicate crystalline phase accounts for 60.00 wt% or more of the 3D curved glass-ceramic, preferably 70.00 wt% or more, more preferably 80.00 wt% or more. An average crystal size in the 3D curved glass-ceramic is no greater than 100 nm. A high content of the main crystalline phase is beneficial to improve the mechanical strength performance of the 3D curved glass-ceramic. A small average crystal size of the 3D curved glass-ceramic is beneficial to ensure the excellent optical performance of the 3D curved glass-ceramic.

In some embodiments, based on the content expressed as the mole percentage of each oxide in the composition of the 3D curved glass-ceramic, the composition of the 3D curved glass-ceramic satisfies: $0.184 \leq 5 \times {P}_{2} {O}_{5} / \left({Li}_{2}O+0.5\times {Al}_{2}{O}_{3}\right) \leq 0.245 ;$ and/or $18.200 \leq {Li}_{2} O / {P}_{2} {O}_{5} \leq 25.500 ;$ and/or $0.190 \leq {P}_{2} {O}_{5} \times \left(CaO+{ZrO}_{2}+{Li}_{2}O+{Al}_{2}{O}_{3}\right) / \left({Na}_{2}O+{K}_{2}O+{B}_{2}{O}_{3}\right) \leq 2.180 ;$ and/or $1.500 \leq 10 \times \left({ZrO}_{2}+{P}_{2}{O}_{5}\right) / {Li}_{2} O \leq 1.900 ;$ and/or $4.200 \leq \left({SiO}_{2}-7\times {Al}_{2}{O}_{3}-{Li}_{2}O\right) / \left({P}_{2}{O}_{5}+{ZrO}_{2}\right) \leq 5.900 ;$ and/or $2.600 \leq 99 \times \left(CaO+{ZrO}_{2}\right) / \left({Li}_{2}O+{Na}_{2}O+1000\times {K}_{2}O\right) \leq 4.950 ;$ and/or $15.000 \leq \left(5.6\times {B}_{2}{O}_{3}+10\times {Al}_{2}{O}_{3}+6.5\times CaO\right) / {ZrO}_{2} \leq 20.000 .$

In some embodiments, based on the content expressed as the mole percentage of each oxide in the composition of the 3D curved glass-ceramic, the composition of the 3D curved glass-ceramic satisfies: $0.186 \leq 5 \times {P}_{2} {O}_{5} / \left({Li}_{2}O+0.5\times {Al}_{2}{O}_{3}\right) \leq 0.243 ;$ and/or $18.500 \leq {Li}_{2} O / {P}_{2} {O}_{5} \leq 24.700 ;$ and/or $0.190 \leq {P}_{2} {O}_{5} \times \left(CaO+{ZrO}_{2}+{Li}_{2}O+{Al}_{2}{O}_{3}\right) / \left({Na}_{2}O+{K}_{2}O+{B}_{2}{O}_{3}\right) \leq 2.170 ;$ and/or $1.550 \leq 10 \times \left({ZrO}_{2}+{P}_{2}{O}_{5}\right) / {Li}_{2} O \leq 1.850 ;$ and/or $4.600 \leq \left({SiO}_{2}-7\times {Al}_{2}{O}_{3}-{Li}_{2}O\right) / \left({P}_{2}{O}_{5}+{ZrO}_{2}\right) \leq 5.850 ;$ and/or $2.680 \leq 99 \times \left(CaO+{ZrO}_{2}\right) / \left({Li}_{2}O+{Na}_{2}O+1000\times {K}_{2}O\right) \leq 4.930 ;$ and/or $16.000 \leq \left(5.6\times {B}_{2}{O}_{3}+10\times {Al}_{2}{O}_{3}+6.5\times CaO\right) / {ZrO}_{2} \leq 20.000 .$

In some embodiments, at a thickness of 0.6 mm, an optical b-value of the 3D curved glass-ceramic is ≤ 1.00, preferably the optical b-value is ≤ 0.70, more preferably the optical b-value is ≤ 0.55. A smaller b-value indicates better optical performance and overall display effect of the 3D curved glass-ceramic.

In some embodiments, at a thickness of 0.6 mm, a difference between a maximum b-value and a minimum b-value measured at nine locations on the main surface of the 3D curved glass-ceramic is ≤ 0.30, preferably the difference between the maximum b-value and the minimum b-value measured at nine locations on the main surface is ≤ 0.10, more preferably the difference between the maximum b-value and the minimum b-value measured at nine locations on the main surface is ≤ 0.06. A smaller difference between the maximum b-value and the minimum b-value measured at nine locations on the main surface of the 3D curved glass-ceramic sheet of this specification indicates better overall uniformity and better overall display effect of the 3D curved glass-ceramic sheet of the present disclosure.

The nine locations are respectively: (1) four locations corresponding to test circles I close to four corners of the main surface; (2) four locations corresponding to test circles II each centered at points on line segments connecting centers of the four test locations of test circles I, the points being closest to midpoints of long sides or short sides of the main surface; (3) one location corresponding to test circle III centered at a center point of the main surface.

In some embodiments, when the thickness of the 3D curved glass-ceramic is 0.6 mm, a haze is ≤ 0.20%, and at a wavelength of 550 nm, the transmittance of the glass-ceramic is ≥ 90.00%.

A base glass, which can be used to prepare the 3D curved glass-ceramic according to any one of the preceding embodiments, wherein, based on the mole percentage of oxides, the composition of the base glass comprises:
SiO₂: 60.00 mol% to 71.00 mol%, Al₂O₃: 1.50 mol% to 5.00 mol%, P₂O₅: 0.80 mol% to 1.50 mol%, ZrO₂: 2.00 mol% to 4.00 mol%, Na₂O: 0.00 mol% to 1.00 mol%, K₂O: 0.00 mol% to 0.50 mol%, Li₂O: 20.00 mol% to 30.00 mol%, CaO: 0.00 mol% to 1.60 mol%, B₂O₃: 0.00 mol% to 1.00 mol%;
based on the content expressed as the mole percentage of each oxide in the composition of the base glass, the composition of the base glass satisfies: $0.180 \leq 5 \times {P}_{2} {O}_{5} / \left({Li}_{2}O+0.5\times {Al}_{2}{O}_{3}\right) \leq 0.250 ;$ $18.200 \leq {Li}_{2} O / {P}_{2} {O}_{5} \leq 25.500 ;$ $0.100 \leq {P}_{2} {O}_{5} \times \left(CaO+{ZrO}_{2}+{Li}_{2}O+{Al}_{2}{O}_{3}\right) / \left({Na}_{2}O+{K}_{2}O+{B}_{2}{O}_{3}\right) \leq 2.200 ;$ $1.500 \leq 10 \times \left({ZrO}_{2}+{P}_{2}{O}_{5}\right) / {Li}_{2} O \leq 2.000 ;$ $4.000 \leq \left({SiO}_{2}-7\times {Al}_{2}{O}_{3}-{Li}_{2}O\right) / \left({P}_{2}{O}_{5}+{ZrO}_{2}\right) \leq 6.000 ;$ $2.600 \leq 99 \times \left(CaO+{ZrO}_{2}\right) / \left({Li}_{2}O+{Na}_{2}O+1000\times {K}_{2}O\right) \leq 5.000 ;$ $12.200 \leq \left(5.6\times {B}_{2}{O}_{3}+10\times {Al}_{2}{O}_{3}+6.5\times CaO\right) / {ZrO}_{2} \leq 20.000 .$

By enabling the base glass to meet the above composition requirements, not only can good melting conditions for the base glass brick be ensured, but also a preformed glass-ceramic brick with good overall uniformity, good display effect, excellent optical performance, excellent mechanical performance, and with petalite crystalline phase and lithium disilicate crystalline phase as the main crystalline phases can be prepared, which is beneficial for hot-bending to produce 3D curved glass-ceramic products with excellent optical and mechanical performances.

In some embodiments, as tested by simultaneous thermal analysis, under a protective atmosphere of nitrogen, the base glass is heated from room temperature to 900 °C at a heating rate of 10 °C/min to obtain a heating DSC curve. In this heating DSC curve, there are at least two exothermic peaks, wherein the first exothermic peak temperature T₁ is 600 °C to 730 °C, the second exothermic peak temperature T₂ is 740 °C to 800 °C, and T₁ and T₂ satisfy the relational expression: 100°C ≥ T₂ - T₁ ≥ 40°C, preferably 80°C ≥ T₂ - T₁ ≥ 50°C. The large-sized base glass bricks employing a base glass formulation satisfying specific DSC curve characteristics, when subjected to heat treatment under the process conditions of mass production line for glass-ceramics, can produce preformed glass-ceramic bricks with optical performance and display effects meeting the application requirements for display screens. This can well solve the problems in the prior art during mass production of the preformed glass-ceramic bricks, such as significant differences in b-values between different areas of the glass brick, locally presenting undesired colors, uneven coloration, and poor display performance.

In some embodiments, within the temperature range from T_{g} to T₂, the upper precipitation limit temperature Tₘₐₓ (Li₂SiO₃) of the lithium metasilicate crystalline phase and the upper precipitation limit temperature Tₘₐₓ (SiO₂) of the quartz crystalline phase in the base glass are tested, and Tₘₐₓ (Li₂SiO₃) ≥ Tₘₐₓ (SiO₂), wherein T_{g} is the glass transition temperature of the base glass. By making the base glass satisfy, within a specific temperature range, that the upper precipitation limit temperature Tₘₐₓ (SiO₂) of the quartz crystalline phase is lower than the upper precipitation limit temperature Tₘₐₓ (Li₂SiO₃) of the lithium metasilicate crystalline phase, it can be ensured that under specific heat treatment process conditions, which are used to prepare preformed glass-ceramics with petalite and lithium disilicate as the main crystalline phases, the precipitation of the quartz crystalline phase can be effectively avoided. Combined with the subsequent hot-bending process, the lithium metasilicate crystalline phase can also be transformed into the desired lithium disilicate crystalline phase, thereby avoiding the adverse effects of the quartz crystalline phase and lithium metasilicate crystalline phase on the optical effect of the glass-ceramic.

In some embodiments, based on the mole percentage of oxides, the composition of the base glass comprises:
SiO₂: 67.50 mol% to 71.00 mol%, Al₂O₃: 3.50 mol% to 5.00 mol%, P₂O₅: not less than 0.85 mol% and less than 1.50 mol%, ZrO₂: 2.50 mol% to 3.50 mol%, Na₂O: greater than 0.00 mol% and not greater than 1.00 mol%, K₂O: greater than 0.00 mol% and not greater than 0.50 mol%, Li₂O: 20.00 mol% to 25.00 mol%, CaO: greater than 0.50 mol% and not greater than 1.50 mol%, B₂O₃: 0.00 mol% to 1.00 mol%. By adjusting the content relationships of necessary oxides, it is beneficial to further improve the glass network structure, thereby helping to ensure the production of large-sized preformed glass-ceramics with good overall uniformity, and further ensuring the production of 3D curved glass-ceramics with excellent optical and strength performances.

A preparation method for the 3D curved glass-ceramic according to any one of the above embodiments, comprising the following steps:
(1) performing heat treatment on the base glass according to any one of the above embodiments to obtain a preformed glass-ceramic product comprising a lithium metasilicate crystalline phase, a lithium disilicate crystalline phase, and a petalite crystalline phase, with a degree of crystallization not less than 60.00 wt%;
(2) processing the preformed glass-ceramic product obtained in step (1) into a flat glass-ceramic sheet of the desired specification size, and performing hot-bending treatment on the obtained flat glass-ceramic sheet to obtain a 3D curved glass-ceramic, wherein the 3D curved glass-ceramic comprises a petalite crystalline phase and a lithium disilicate crystalline phase, and the petalite crystalline phase and the lithium disilicate crystalline phase have a higher weight percentage than other crystalline phases present in the 3D curved glass-ceramic.

In some embodiments, in step (1), the heat treatment comprises nucleation treatment and crystallization treatment, wherein a temperature of the nucleation treatment is (T_{g} - 20 °C) to (T_{g} + 40 °C), a time of the nucleation treatment is 0 min to 6000 min, a temperature of the crystallization treatment is (T₁ - 50 °C) to T₁, a time of the crystallization treatment is 30 min to 6000 min; T_{g} is the glass transition temperature of the base glass; in step (1), the heating rate during the heat treatment process is 5 °C/min to 15 °C/min.

In some embodiments, in step (2), the hot-bending treatment process comprises at least 3 preheating stations, at least 3 hot-pressing stations, and at least 3 cooling stations; a temperature of the preheating stations is 500 °C to 850 °C, a temperature of the hot-pressing stations is 700 °C to 900 °C, a pressure of the hot-pressing stations is 0 MPa to 1 MPa, and a temperature of the cooling stations is 500 °C to 800 °C.

In some embodiments, a working time of each preheating station is 90 s to 360 s, a working time of each hot-pressing station is 90 s to 360 s, and a working time of each cooling station is 90 s to 360 s.

A chemically strengthened glass-ceramic, wherein a composition at a center of the chemically strengthened glass-ceramic is the same as the composition of the 3D curved glass-ceramic according to any one of the above embodiments, the chemically strengthened glass-ceramic comprises a compressive stress layer region extending from a surface of the chemically strengthened glass-ceramic to a depth of compression, and has tensile stress inside the chemically strengthened glass-ceramic. By forming a compressive stress layer on the surface of the 3D curved glass-ceramic, it is beneficial to further improve the mechanical performances of the 3D curved glass-ceramic.

A glass device, wherein the glass device comprises the 3D curved glass-ceramic according to any one of the above embodiments or comprises the chemically strengthened glass-ceramic according to the above embodiments.

An electronic apparatus, wherein the electronic apparatus comprises the 3D curved glass-ceramic according to any one of the above embodiments or comprises the chemically strengthened glass-ceramic according to the above embodiments.

The technical solutions of the present disclosure at least have the following advantages or beneficial effects.

Through the above technical solutions, especially by controlling the content of each oxide within a suitable range and matching ratios of the oxide contents under specific conditions, the generation of main crystalline phases can be ensured during the mass production of 3D curved glass-ceramic products. At the same time, it ensures that the prepared 3D curved glass-ceramic product exhibits a relatively uniform overall display effect, effectively avoiding the problems of significant differences in b-values between different areas and poor display performance in mass-produced 3D curved glass-ceramic products.

The large-sized base glass bricks prepared using the glass of the present disclosure, when heat-treated to prepare preformed glass-ceramic bricks, can ensure that the b-values across the main surface of the preformed glass-ceramic brick are close, thereby ensuring that the 3D curved glass-ceramic made from it also exhibits a good display effect. Using the specific composition of the present disclosure can ensure obtaining a 3D curved glass-ceramic with good optical performance, which is beneficial for achieving industrial mass production of 3D curved glass-ceramics and improving the yield of 3D curved glass-ceramic products. Meanwhile, the glass-ceramic prepared using the above base glass formulation can be chemically strengthened to obtain a chemically strengthened glass-ceramic with excellent strength performance, especially drop resistance performance.

In the mass production process of 3D curved glass-ceramics with petalite and lithium disilicate as main crystalline phases, products with poor optical display performance basically all comprise cristobalite (SiO₂) impurity phases. By adjusting the composition of the base glass, the present disclosure makes the upper precipitation limit temperature Tₘₐₓ (SiO₂) of the quartz crystalline phase lower than the upper precipitation limit temperature Tₘₐₓ (Li₂SiO₃) of the lithium metasilicate crystalline phase within a specific temperature range in the base glass. This can ensure that under specific heat treatment process conditions, which are used to prepare preformed glass-ceramics with petalite and lithium disilicate as the main crystalline phases, the precipitation of the quartz crystalline phase is effectively avoided. Combined with the subsequent hot-bending process, the lithium metasilicate crystalline phase can also be transformed into the desired lithium disilicate crystalline phase, thereby avoiding the adverse effects of the quartz crystalline phase and lithium metasilicate crystalline phase on the optical effect of the glass.

### BRIEF DESCRIPTION OF THE DRAWINGS

In order to illustrate the technical solutions of the examples of the present disclosure more clearly, the drawings required for describing the examples will be briefly introduced below. It should be understood that the following drawings show only some examples of the present disclosure and therefore should not be considered as limiting the scope. For those of ordinary skill in the art, other related drawings can be obtained based on these drawings without creative effort.
FIG. 1 is the heating DSC curve of the base glass of Example 1.
FIG. 2 is the heating DSC curve of the base glass of Example 10.
FIG. 3 is the heating DSC curve of the base glass of Comparative Example 1.
FIG. 4 is the heating DSC curve of the base glass of Comparative Example 2.
FIG. 5 is a schematic diagram of the structure of a Li₃PO₄ crystal attached with lithium metasilicate crystals.
FIG. 6 is the standard XRD diffraction pattern for quartz appearing in glass-ceramics.
FIG. 7 is a schematic diagram of the nine locations when testing the b-values at nine locations on the main surface of the glass-ceramic.
FIG. 8 is the XRD diffraction pattern of the preformed glass-ceramic obtained after the base glass of Example 2 was subjected to heat treatment process C.
FIG. 9 is the XRD diffraction pattern of the preformed glass-ceramic obtained after the base glass of Comparative Example 2 was subjected to heat treatment process C.
FIG. 10 is the XRD diffraction curves at the location with the maximum b-value and the location with the minimum b-value of the 3D curved glass-ceramic of Example 1.
FIG. 11 is the XRD diffraction curves at the location with the maximum b-value and the location with the minimum b-value of the 3D curved glass-ceramic of Comparative Example 6.
FIG. 12 is a picture of the preformed glass-ceramic of Comparative Example 7 cracking during the 3D hot-bending molding process.
FIG. 13 is the transmittance curve of the 3D curved glass-ceramic of Example 1.

### DETAILED DESCRIPTION

The endpoints and any values of the ranges disclosed herein are not limited to the precise ranges or values, and these ranges or values should be understood to comprise values close to these ranges or values. For numerical ranges, the endpoint values of each range, the endpoint values of each range and separate point values, and separate point values can be combined with each other to obtain one or more new numerical ranges, which should be considered as specifically disclosed herein. Among them, the terms "optional" and "optionally" both mean that they may be comprised or may not be comprised (or may exist or may not exist). The term "and/or" as used herein is inclusive, for example, "A and/or B" means only A, or only B, or both A and B.

### Term explanation and test methods:

Base glass: Also referred to as basic glass, refers to glass that has not been subjected to nucleation treatment, crystallization treatment, or strengthening treatment.

Glass-ceramic: Also referred to as glass-ceramics or microcrystalline glass, is a type of solid composite material that simultaneously comprises a glassy phase and a crystal phase (also known as microcrystalline phase, and crystalline phase).

3D curved glass-ceramic: Also referred to as 3D curved microcrystalline glass, is made by making flat glass-ceramic curved using methods such as cold grinding, hot-bending, or hot-pressing, so that both main surfaces of the flat glass-ceramic become curved.

Chemically strengthened glass-ceramic: Refers to the solid composite material obtained after the glass-ceramic has undergone chemical strengthening treatment.

In the present disclosure, during high-temperature chemical strengthening treatment, alkali metal ions with larger ionic radii (such as potassium ions, and sodium ions) in the molten salt bath will replace alkali metal ions with smaller ionic radii in the glass-ceramic (such as sodium ions, and lithium ions), thereby producing an exchange ion volume difference and generate compressive stress on the surface of the glass-ceramic.

Main crystalline phase: Refers to the crystalline phase that has a higher weight content than other crystalline phases present in the glass-ceramic.

Main surface: Refers to the surface with the largest surface area on a glass brick or glass sheet, for example, the upper surface or lower surface of a horizontally placed cover plate glass.

Uneven coloration: Refers to the situation that when strong light shines into the glass sheet from the side, the main surface of the glass sheet exhibits local coloration and/or overall uneven coloration of the glass sheet. Products with uneven coloration are defined as defective products during production because they cannot meet the display usage requirements for display screen cover plate glass.

Glass transition temperature: T_{g}, unit °C, also referred to as the brittle temperature of glass. It is the highest temperature at which glass exhibits brittleness, corresponding to a viscosity of 10¹² Pa·s, also referred to as the annealing upper limit temperature. At this temperature, internal stresses in glass products caused by non-uniform cooling can be eliminated. In the present disclosure, T_{g} is obtained from the heating DSC curve of the base glass, manifested on the DSC curve as a step where the baseline changes toward the endothermic direction. Tangents are drawn to the inflection points of the two extended baselines before and after the step and the curve, respectively, then the average of the temperatures corresponding to the two intersection points is the glass transition temperature.

CS_50: Refers to the compressive stress value at a depth of 50 µm from the main surface of the chemically strengthened glass-ceramic.

DOL_0: Compressive stress layer depth, also referred to as compressive stress depth, refers to the distance in the thickness direction of the glass from any surface of the glass to the location where the compressive stress near that surface is zero.

|CT_AV|: The absolute value of the average tensile stress in the tensile stress layer, specifically refers to the absolute value of the average of all tensile stresses in the tensile stress layer.

Testing conditions for CS_50, |CT_AV|, DOL_0: Tested using Japan's ORIHARA SLP-2000, light source wavelength of 518 nm, SOC = 25.5 (nm/cm)/MPa, refractive index = 1.54, exposure time: 300 µsec.

When testing surface CS_50, |CT_AV|, DOL_0, it is necessary to first drop an index matching fluid onto the stress meter, then wipe the chemically strengthened glass-ceramic sample to be tested clean and place it on the test path to test its stress value. The stress meter is SLP-2000 and the refractive index matching fluid used therewith has a refractive index of 1.51.

Transmittance: During the process where the incident luminous flux enters from the illuminated surface or medium incident surface and exits from the other surface, the ratio of the radiant energy transmitted through the object to the total radiant energy incident on the object.

b-value: Belongs to the Lab color model, a color mode formulated by the International Commission on Illumination, the positive or negative of the b-value represents yellow-blue color.

Haze: Haze is the percentage of transmitted light intensity deviating greater than 2.5 ° from the incident light to the total transmitted light intensity.

Precursor: A form of existence before obtaining the target substance.

Residual glass phase: Refers to the amorphous phase part in the glass-ceramic.

Simultaneous thermal analysis test: Using a METTLER TOLEDO TGA/DSC3+ simultaneous thermal analyzer, tested according to the required process. The obtained curve is called the DSC curve, comprising the heating DSC curve.

Test conditions for the heating DSC curve: The base glass is ground and sieved through a 200-mesh sieve to obtain the sample to be tested. About 20 mg of the sample is weighed. Under a protective atmosphere of nitrogen, it is heated from room temperature to 900 °C at a heating rate of 10 °C/min to obtain the heating DSC curve of the sample. The differential thermal analysis instrument used in the present disclosure for testing the heating DSC curve is the METTLER TOLEDO TGA/DSC3+ simultaneous thermal analyzer. The standard substance used for testing is α-Al₂O₃ powder. The container for placing the sample is a platinum crucible. The ambient temperature for instrument placement is 24 °C, and air humidity is 40%.

Thickness of glass: Measured by a laser thickness gauge.

Optical performance testing for glass-ceramic with a thickness of 2 mm or less: In the present disclosure, the haze, L value, a value, b-value of the glass-ceramic are tested using the transmission mode of Japan Konica Minolta's spectrophotometer CM-3600A. The test aperture of the spectrophotometer CM-3600A used is 25.6 mm. The present disclosure used Shimadzu's UV-2000 UV-Vis spectrophotometer to test transmittance and its curve. To ensure accuracy, this test method is suitable for testing glass sheets with a thickness of 2 mm or less.

Determination of crystalline phases: The XRD test results (in RAW format) are imported into the X-ray diffraction data Rietveld refinement software JADE Standard 8.6 for fitting and analysis to determine the crystalline phases in the glass-ceramic sample.

The crystal content in the present disclosure refers to the percentage of crystal or crystalline phase mass relative to the mass of the glass-ceramic, expressed as weight percentage.

Determination of crystal content: The XRD test results (in RAW format) are imported into the X-ray diffraction data Rietveld refinement software JADE Standard 8.6 for fitting and calculation to obtain the crystal content in the glass-ceramic sample. Specifically, the ratio of the fitted crystalline phase peak area to the total fitted peak area is the crystal content.

Average crystal size test: Using the result data obtained from XRD testing, according to the Scherrer formula D = Kλ / (β cosθ), the average crystal size of the sample can be calculated. Where λ is the X-ray wavelength, λ = 0.154056 nm, β is the full width at half maximum of the diffraction peak, K = 0.89, θ is the Bragg diffraction angle. Specifically, the RAW file (diffraction pattern) output by the XRD instrument is subjected to curve-fitting in JADE Standard 8.6 software, and Jade outputs the fitting report. Based on the 2θ angle value and Peak FWHM value corresponding to each diffraction peak in the fitting report, and converting the Peak FWHM value to radians: β = (FWHM / 180 × 3.14). The crystal size for each diffraction peak is calculated using the Scherrer formula D = Kλ / (β cosθ) and then averaged to obtain the average crystal size.

Test method for upper precipitation limit temperature of crystalline phases: At a heating rate of 10 °C/min, the base glass is heated to Tg, Tg+5°C, Tg+10°C, Tg+15°C... respectively, continuing with increments of 5 °C up to T₂ for heat treatment. The heat treatment time at each temperature is 30 min to 240 min (in the corresponding examples and comparative examples of the present disclosure, the heat treatment time at each temperature is 240 min). The crystalline phase composition in the samples obtained by treating the base glass under the above different heat treatment temperature conditions is tested to obtain the upper precipitation limit temperatures of the lithium metasilicate (Li₂SiO₃) crystalline phase and the quartz (SiO₂) crystalline phase.

Here, the "upper precipitation limit temperature of the lithium metasilicate crystalline phase" specifically refers to the highest temperature within the T_{g} to T₂ temperature range at which the lithium metasilicate crystalline phase precipitates in the base glass. Beyond this temperature, lithium metasilicate will not precipitate in the base glass.

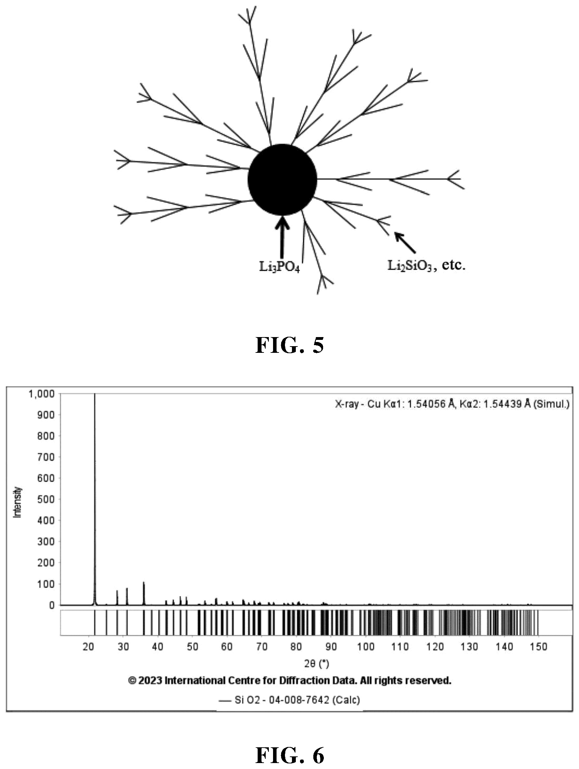

Here, the "upper precipitation limit temperature of the quartz crystalline phase" specifically refers to the highest temperature within the T_{g} to T₂ temperature range at which the quartz crystalline phase precipitates in the base glass. Beyond this temperature, quartz will not precipitate in the base glass. The standard XRD diffraction pattern for quartz appearing in glass-ceramics is shown in FIG. 6.

Here, T_{g} is the glass transition temperature of the base glass, and T₂ is the second exothermic peak temperature in the heating DSC curve obtained during DSC testing of the base glass.

If at the temperature point T₂, a given crystalline phase always exists, it indicates that its upper precipitation limit temperature is greater than T₂.

Fixed-point height drop test:
(1) A 120-mesh sandpaper is attached to the lower surface of a 187 g mock device, and the mock device is placed on a Wonder Inno drop tester;
(2) A glass-ceramic sample sheet to be tested with specifications of 50 mm × 50 mm × 0.6 mm is placed on the smooth marble plate directly below the mock device, with the glass-ceramic sample sheet facing the sandpaper;
(3) The mock device is dropped from a fixed point height of 1.0 m to impact the glass-ceramic sample sheet directly below it. If the glass-ceramic sample sheet did not break, the sandpaper on the lower surface of the mock device is replaced, and the above drop impact process is repeated until the glass-ceramic broke, recording the number of drops at breakage.

At least 10 identical glass-ceramic sample sheets from each batch are subjected to the fixed-point height drop test, and the average of the test results from 10 glass-ceramic sheets is calculated to characterize the drop resistance of the glass-ceramic.

Surface Na₂O concentration test: Surface Na₂O concentration equals surface Na₂O mass / total surface oxide mass, where total surface oxide mass comprises oxides that can be accurately tested by XRF such as SiO₂, Al₂O₃, P₂O₅, ZrO₂, Na₂O, K₂O, CaO, etc., and does not comprise oxides that cannot be accurately tested by XRF such as Li₂O, B₂O₃, etc. The surface Na₂O concentration of the chemically strengthened glass-ceramic in the present disclosure is measured by X-ray fluorescence spectroscopy (XRF). The surface Na element content in the chemically strengthened glass-ceramic is measured by XRF, and then the surface Na₂O concentration is calculated. The calculation method is: surface Na₂O concentration = (surface Na element content × relative molecular weight of Na₂O) / (relative atomic weight of Na × 2). It should be understood that surface Na element content = Na element mass / total element mass, and total element mass = total oxide mass. The equipment used for testing is Thermo Scientific ARL^{™} PERFORM'X. The target is Rh (rhodium), X-ray tube voltage is 40 kV, current is 60 mA, collimator is 0.15, crystal selects LiF200, detector selects FPC, test range is 29 mm circle, and analysis software is UniQuant standardless analysis. When testing surface Na₂O concentration by XRF, standardless testing is used, and the concentration of elements with atomic number 6 or smaller or their oxides in the glass is not tested. That is, in the present disclosure, when testing surface Na₂O concentration by XRF, the total surface oxide mass does not comprise the mass of elements with atomic number 6 or smaller or their oxides in the glass.

As described above, the present disclosure provides a 3D curved glass-ceramic, wherein the 3D curved glass-ceramic comprises a petalite (LiAlSi₄O₁₀) crystalline phase and a lithium disilicate (Li₂Si₂O₅) crystalline phase, wherein the petalite crystalline phase and the lithium disilicate crystalline phase have a higher weight percentage than other crystalline phases present in the 3D curved glass-ceramic.

The 3D curved glass-ceramic of the present disclosure is prepared by subjecting the base glass to heat treatment and hot-bending treatment. Therefore, it can be understood that, based on oxides, the composition of the base glass is the same as the composition of the 3D curved glass-ceramic.

In the present disclosure, based on the mole percentage of oxides, the composition of the 3D curved glass-ceramic or the base glass for preparing this 3D curved glass-ceramic comprises:
SiO₂: 60.00 mol% to 71.00 mol%, Al₂O₃: 1.50 mol% to 5.00 mol%, P₂O₅: 0.80 mol% to 1.50 mol%, ZrO₂: 2.00 mol% to 4.00 mol%, Na₂O: 0.00 mol% to 1.00 mol%, K₂O: 0.00 mol% to 0.50 mol%, Li₂O: 20.00 mol% to 30.00 mol%, CaO: 0.00 mol% to 1.60 mol%, B₂O₃: 0.00 mol% to 1.00 mol%;
based on the content expressed as the mole percentage of each oxide in the composition of the 3D curved glass-ceramic or the base glass for preparing this 3D curved glass-ceramic, the composition of the 3D curved glass-ceramic or the base glass for preparing this 3D curved glass-ceramic satisfies: $0.180 \leq 5 \times {P}_{2} {O}_{5} / \left({Li}_{2}O+0.5\times {Al}_{2}{O}_{3}\right) \leq 0.250 ;$ $18.200 \leq {Li}_{2} O / {P}_{2} {O}_{5} \leq 25.500 ;$ $0.100 \leq {P}_{2} {O}_{5} \times \left(CaO+{ZrO}_{2}+{Li}_{2}O+{Al}_{2}{O}_{3}\right) / \left({Na}_{2}O+{K}_{2}O+{B}_{2}{O}_{3}\right) \leq 2.200 ;$ $1.500 \leq 10 \times \left({ZrO}_{2}+{P}_{2}{O}_{5}\right) / {Li}_{2} O \leq 2.000 ;$ $4.000 \leq \left({SiO}_{2}-7\times {Al}_{2}{O}_{3}-{Li}_{2}O\right) / \left({P}_{2}{O}_{5}+{ZrO}_{2}\right) \leq 6.000 ;$ $2.600 \leq 99 \times \left(CaO+{ZrO}_{2}\right) / \left({Li}_{2}O+{Na}_{2}O+1000\times {K}_{2}O\right) \leq 5.000 ;$ $12.200 \leq \left(5.6\times {B}_{2}{O}_{3}+10\times {Al}_{2}{O}_{3}+6.5\times CaO\right) / {ZrO}_{2} \leq 20.000 .$ In the present disclosure,
by controlling the content of each oxide within a suitable range in combination with specific ratios of oxide contents under given conditions, the generation of main crystalline phases can be ensured during the mass production of 3D curved glass-ceramic products. At the same time, it ensures that the prepared 3D curved glass-ceramic products exhibit a relatively uniform overall display effect, effectively avoiding the problem of significant differences in b-values between different areas and poor display performance in mass-produced 3D curved glass-ceramic products.

In the present disclosure, SiO₂ is an oxide that forms the glass network skeleton, used to stabilize the network structure of the base glass and the 3D curved glass-ceramic, and is an important component constituting crystalline phases such as lithium disilicate, petalite, β-spodumene, and quartz. When the base glass is heat-treated to form the glass-ceramic, the SiO₂ content should be sufficiently high to form sufficient amounts of petalite crystals and lithium disilicate crystals. When the SiO₂ content is too low, the glass tends to have a higher thermal expansion coefficient and reduced thermal shock resistance; when the SiO₂ content is too high, it can lead to poor meltability of the glass, or an increase in the viscosity of the molten glass, making it difficult to clarify the glass, increasing the difficulty of glass forming, reducing productivity, and also causing the heat treatment time for crystallization of the base glass to become longer. In some embodiments, the 3D curved glass-ceramic or base glass of the present disclosure comprises 60.00 mol% to 71.00 mol% of SiO₂. In some embodiments, the 3D curved glass-ceramic or the base glass for preparing this 3D curved glass-ceramic can each comprise 60.00 mol% to 71.00 mol%, 60.90 mol% to 70.00 mol%, 60.90 mol% to 69.00 mol%, 60.90 mol% to 68.00 mol%, 62.00 mol% to 65.00 mol%, 63.00 mol% to 70.00 mol%, 64.00 mol% to 68.00 mol%, 65.00 mol% to 67.00 mol%, or 67.50 mol% to 71.00 mol% of SiO₂. In some embodiments, the 3D curved glass-ceramic or the base glass for preparing this 3D curved glass-ceramic can each comprise 60.00 mol%, 61.00 mol%, 62.00 mol%, 63.00 mol%, 64.00 mol%, 65.00 mol%, 66.00 mol%, 67.00 mol%, 67.50 mol%, 68.00 mol%, 69.00 mol%, 70.00 mol%, or 71.00 mol% of SiO₂, or can comprise SiO₂ within a numerical range constituted by any two of the above specific numerical values as endpoints, as long as the 3D curved glass-ceramic or base glass with the properties required by the present disclosure can be obtained. It should be understood that, in specific embodiments, any of the above ranges can be combined with any other range, as long as the 3D curved glass-ceramic or base glass with the properties required by the present disclosure can be obtained.

In the present disclosure, Al₂O₃ can be used to construct the glass skeleton and is an indispensable component for forming petalite. Al₂O₃ is coordinated around the crystal nuclei, forming a "core-shell" structure. This structure makes it difficult for the crystal nucleus components to be supplied from outside the shell, the crystal nuclei do not grow easily, and many fine crystal grains tend to form. An appropriate amount of Al₂O₃ can stabilize the glass network structure, improve mechanical properties and chemical durability, inhibit phase separation of the glass, reduce the thermal expansion coefficient, and increase the strain point. When the Al₂O₃ content is too low, the glass tends to have a higher thermal expansion coefficient, its chemical durability decreases, and the crystal nuclei become larger, making the glass-ceramic prone to opacity; when the Al₂O₃ content is too high, the meltability of the glass becomes poor, production becomes difficult, and mullite crystals are prone to precipitate, causing the glass to devitrify. In some embodiments, the 3D curved glass-ceramic or the base glass for preparing this 3D curved glass-ceramic of the present disclosure comprises 1.50 mol% to 5.00 mol% of Al₂O₃. In some embodiments, the 3D curved glass-ceramic or the base glass for preparing this 3D curved glass-ceramic can each comprise 1.50 mol% to 5.00 mol%, 3.00 mol% to 5.00 mol%, 3.00 mol% to 4.00 mol%, 3.00 mol% to 4.50 mol%, 3.50 mol% to 4.50 mol%, or 4.50 mol% to 5.00 mol% of Al₂O₃. In some embodiments, the 3D curved glass-ceramic or the base glass for preparing this 3D curved glass-ceramic can each comprise 1.50 mol%, 2.00 mol%, 2.50 mol%, 3.00 mol%, 3.20 mol%, 3.80 mol%, 4.00 mol%, 4.40 mol%, 4.80 mol%, or 5.00 mol% of Al₂O₃, or can comprise Al₂O₃ within a numerical range constituted by any two of the above specific numerical values as endpoints, as long as the 3D curved glass-ceramic or base glass with the properties required by the present disclosure can be obtained. It should be understood that, in specific embodiments, any of the above ranges can be combined with any other range, as long as the 3D curved glass-ceramic or base glass with the properties required by the present disclosure can be obtained.

In the present disclosure, Li₂O is the main component of the petalite crystalline phase and the lithium disilicate crystalline phase, and is also a necessary component for chemical strengthening. An appropriate amount of Li₂O is beneficial to ensure that the transparency, melting and forming effect, crystallization ability, chemical strengthening performance, and other properties of the 3D curved glass-ceramic all meet requirements. When the Li₂O content is too low, the glass is prone to precipitate crystalline phases, such as mullite, etc., causing the glass to devitrify, reducing meltability or increasing viscosity, making clarification difficult and forming more difficult; when the Li₂O content is too high, the heat treatment temperature for crystallization of the base glass decreases accordingly, the crystallization ability of the glass becomes too strong, the glass tends to devitrify, and the crystallized glass becomes prone to breakage. In some embodiments, the 3D curved glass-ceramic or the base glass for preparing this 3D curved glass-ceramic of the present disclosure comprises 20.00 mol% to 30.00 mol% of Li₂O. In some embodiments, the 3D curved glass-ceramic or the base glass for preparing this 3D curved glass-ceramic can comprise 20.00 mol% to 30.00 mol%, 22.00 mol% to 28.00 mol%, 24.00 mol% to 26.00 mol%, 20.00 mol% to 24.00 mol%, 24.00 mol% to 30.00 mol%, 20.00 mol% to 22.00 mol%, 28.00 mol% to 30.00 mol%, or 21.00 mol% to 28.00 mol% of Li₂O. In some embodiments, the 3D curved glass-ceramic or the base glass for preparing this 3D curved glass-ceramic can comprise 20.50 mol%, 21.50 mol%, 22.50 mol%, 23.50 mol%, 24.50 mol%, 25.50 mol%, 26.50 mol%, 27.50 mol%, 28.50 mol%, 29.50 mol%, or 30.00 mol% of Li₂O, or can comprise Li₂O within a numerical range constituted by any two of the above specific numerical values as endpoints, as long as the 3D curved glass-ceramic or base glass with the properties required by the present disclosure can be obtained. It should be understood that, in specific embodiments, any of the above ranges can be combined with any other range, as long as the 3D curved glass-ceramic or base glass with the properties required by the present disclosure can be obtained.

In the present disclosure, P₂O₅ is a glass-forming oxide, existing in the network structure as phosphorus-oxygen tetrahedra [PO₄]. P₂O₅ appears preferentially during heat treatment, first causing phase separation and segregation in the glass, forming amorphous precursor phases of Li₃PO₄. Then, Li₃PO₄ serves as heterogeneous nucleation sites, and crystalline phases such as lithium metasilicate grow attached to the amorphous Li₃PO₄. As the P₂O₅ content increases, the number of heterogeneous nucleation sites increases, and the crystal grains using Li₃PO₄ as nucleation sites are effectively refined, which is beneficial for improving the overall transmittance of the glass-ceramic, the uniformity of the glass, and reducing the b-value. Within a given range of P₂O₅, the enhancement effect reaches its optimum. However, when the P₂O₅ content is too high, the upper precipitation limit temperature increases, easily generating more Li₃PO₄ crystals, resulting in insufficient Li₂O content for forming lithium disilicate and petalite. This further causes the base glass to easily precipitate quartz crystals, leading to a decrease in the transmittance of the glass-ceramic and a decrease in the overall optical uniformity of the glass-ceramic. Moreover, it may even cause the base glass to crystallize directly during melting and forming. When the P₂O₅ content is too low, coarse ZrO₂ crystals are prone to precipitate, causing the glass to devitrify.

In some embodiments, the 3D curved glass-ceramic or the base glass for preparing this 3D curved glass-ceramic of the present disclosure comprises 0.80 mol% to 1.50 mol% of P₂O₅. This content range of P₂O₅ is beneficial to ensure that the 3D curved glass-ceramic has high transmittance, good optical uniformity, significantly reduced b-value, and the enhancement effect reaches its optimum. In some embodiments, the 3D curved glass-ceramic or the base glass for preparing this 3D curved glass-ceramic can comprise 0.80 mol% to 1.50 mol%, 0.80 mol% to 1.30 mol%, 1.30 mol% to 1.50 mol%, 0.80 mol% to 1.00 mol%, 1.00 mol% to 1.30 mol%, or 1.10 mol% to 1.50 mol% of P₂O₅. In some embodiments, the 3D curved glass-ceramic or the base glass for preparing this 3D curved glass-ceramic can comprise 0.85 mol%, 0.95 mol%, 1.00 mol%, 1.10 mol%, 1.20 mol%, 1.35 mol%, 1.40 mol%, or 1.50 mol% of P₂O₅, or can comprise P₂O₅ within a numerical range constituted by any two of the above specific numerical values as endpoints, as long as the 3D curved glass-ceramic or base glass with the properties required by the present disclosure can be obtained. It should be understood that, in specific embodiments, any of the above ranges can be combined with any other range, as long as the 3D curved glass-ceramic or base glass with the properties required by the present disclosure can be obtained.

In the present disclosure, since P₂O₅ preferentially generates amorphous Li₃PO₄ during heat treatment, an increase in P₂O₅ will inevitably compete for more Li₂O, thereby reducing the amount of lithium disilicate and petalite formed. Therefore, a certain degree of Li₂O supplementation is needed. In this regard, in the present disclosure, based on the content expressed as the mole percentage of each oxide in the composition of the 3D curved glass-ceramic or the base glass for preparing this 3D curved glass-ceramic, the composition of the 3D curved glass-ceramic or the base glass for preparing this 3D curved glass-ceramic satisfies: 18.200 ≤ Li₂O / P₂O₅ ≤ 25.500, where the chemical formulas in the formula represent the mole percentage of oxides. This is beneficial to ensure the generation of main crystalline phases and improve the strength performance of the glass. In some embodiments, the value of Li₂O / P₂O₅ can be, for example, 18.200, 18.500, 19.000, 19.500, 20.000, 20.500, 21.000, 21.500, 22.000, 22.500, 23.000, 23.500, 24.000, 24.500, 25.000, or 25.500, or can be a value within a numerical range constituted by any two of the above specific numerical values as endpoints, as long as the 3D curved glass-ceramic or base glass with the properties required by the present disclosure can be obtained.

In some embodiments, based on the content expressed as the mole percentage of each oxide in the composition of the 3D curved glass-ceramic or the base glass for preparing this 3D curved glass-ceramic, the composition of the 3D curved glass-ceramic or the base glass for preparing this 3D curved glass-ceramic satisfies: 0.180 ≤ 5 × P₂O₅ / (Li₂O + 0.5 × Al₂O₃) ≤ 0.250, where the chemical formulas in the formula represent the mole percentage of oxides. This is beneficial for forming the petalite and lithium disilicate main crystalline phases. In some embodiments, the value of 5 × P₂O₅ / (Li₂O + 0.5 × Al₂O₃) can be, for example, 0.180, 0.184, 0.190, 0.200, 0.210, 0.220, 0.230, 0.240, 0.245, or 0.250, or can be a value within a numerical range constituted by any two of the above specific numerical values as endpoints, as long as the 3D curved glass-ceramic or base glass with the properties required by the present disclosure can be obtained.

In some embodiments, based on the content expressed as the mole percentage of each oxide in the composition of the 3D curved glass-ceramic or the base glass for preparing this 3D curved glass-ceramic, the composition of the 3D curved glass-ceramic or the base glass for preparing this 3D curved glass-ceramic satisfies: 4.000 ≤ (SiO₂ - 7 × Al₂O₃ - Li₂O) / (P₂O₅ + ZrO₂) ≤ 6.000, where the chemical formulas in the formula represent the mole percentage of oxides. This is beneficial to ensure the optical performance of the 3D curved glass-ceramic. In some embodiments, the value of (SiO₂ - 7 × Al₂O₃ - Li₂O) / (P₂O₅ + ZrO₂) can be, for example, 4.000, 4.200, 4.500, 5.000, 5.500, or 6.000, or can be a value within a numerical range constituted by any two of the above specific numerical values as endpoints, as long as the 3D curved glass-ceramic or base glass with the properties required by the present disclosure can be obtained.

In the present disclosure, an appropriate amount of ZrO₂ can improve the viscosity, hardness, elastic modulus, refractive index, chemical stability of the glass, and reduce the thermal expansion coefficient of the glass. ZrO₂ does not act as a nucleating agent in glass-ceramics with petalite and lithium disilicate structures. After heat treatment, ZrO₂ exists in the residual glass phase, effectively improving the mechanical properties of the residual glass phase. However, excessive ZrO₂ increases the difficulty of melting the base glass, producing white zirconium precipitates during discharge of the molten glass, which is not conducive to producing transparent glass-ceramics. In some embodiments, the 3D curved glass-ceramic or the base glass for preparing this 3D curved glass-ceramic of the present disclosure comprises 2.00 mol% to 4.00 mol% of ZrO₂. Satisfying this content range of ZrO₂ is beneficial for producing transparent 3D curved glass-ceramics and improving the mechanical properties of the 3D curved glass-ceramics. In some embodiments, the 3D curved glass-ceramic or the base glass for preparing this 3D curved glass-ceramic can comprise 2.00 mol% to 4.00 mol%, 2.50 mol% to 3.50 mol%, 2.70 mol% to 3.30 mol%, 2.90 mol% to 3.10 mol%, 2.50 mol% to 3.00 mol%, 2.50 mol% to 2.80 mol%, 2.80 mol% to 3.50 mol%, 2.80 mol% to 3.40 mol%, 2.80 mol% to 3.30 mol%, or 2.80 mol% to 3.10 mol% of ZrO₂. In some embodiments, the 3D curved glass-ceramic or the base glass for preparing this 3D curved glass-ceramic can comprise 2.00 mol%, 2.50 mol%, 2.75 mol%, 2.95 mol%, 3.15 mol%, 3.25 mol%, 3.35 mol%, 3.50 mol%, or 4.00 mol% of ZrO₂, or can comprise ZrO₂ within a numerical range constituted by any two of the above specific numerical values as endpoints, as long as the 3D curved glass-ceramic or base glass with the properties required by the present disclosure can be obtained. It should be understood that, in specific embodiments, any of the above ranges can be combined with any other range, as long as the 3D curved glass-ceramic or base glass with the properties required by the present disclosure can be obtained.

In some embodiments, based on the content expressed as the mole percentage of each oxide in the composition of the 3D curved glass-ceramic or the base glass for preparing this 3D curved glass-ceramic, the composition of the 3D curved glass-ceramic or the base glass for preparing this 3D curved glass-ceramic satisfies: 1.500 ≤ 10 × (ZrO₂ + P₂O₅) / Li₂O ≤ 2.000, where the chemical formulas in the formula represent the mole percentage of oxides. This is beneficial to ensure the strength performance of the 3D curved glass-ceramic. In some embodiments, the value of 10 × (ZrO₂ + P₂O₅) / Li₂O can be, for example, 1.500, 1.550, 1.600, 1.700, 1.800, 1.900, 1.95, or 2.000, or can be a value within a numerical range constituted by any two of the above specific numerical values as endpoints, as long as the 3D curved glass-ceramic or base glass with the properties required by the present disclosure can be obtained.

In the present disclosure, B₂O₃ helps to reduce the melting temperature of the base glass. B₂O₃ exists in the network structure as structural units of boron-oxygen triangles [BO₃] and boron-oxygen tetrahedra [BO₄]. As the B₂O₃ content increases, the relative content of boron-oxygen triangles and boron-oxygen tetrahedra changes, leading to a reversal phenomenon in structure and properties. An appropriate amount of B₂O₃ helps to reduce the melting temperature of the base glass and improve the transmittance, overall uniformity, and other properties of the 3D curved glass-ceramic. However, when the amount of B₂O₃ added is too high, on one hand, the three-dimensional network-structured boron-oxygen tetrahedra [BO₄] transform into two-dimensional layered boron-oxygen triangles [BO₃], and the three-coordinated boron-oxygen triangles [BO₃] are not as strong as the boron-oxygen tetrahedra [BO₄], resulting in an effect of opening the network structure. At the same time, the increase of B₂O₃ content in the residual glass phase reduces the viscosity of the residual glass phase, promoting the growth of crystals such as lithium metasilicate; on the other hand, it reduces the second exothermic peak temperature in the heating DSC curve of the base glass, increasing the precipitation of SiO₂ crystalline phases (e.g., cristobalite), affecting the transmittance of the glass and also making the overall uniformity of the glass brick worse. In some embodiments, the 3D curved glass-ceramic or the base glass for preparing this 3D curved glass-ceramic of the present disclosure comprises 0.00 mol% to 1.00 mol% of B₂O₃. In some embodiments, the 3D curved glass-ceramic or the base glass for preparing this 3D curved glass-ceramic can comprise 0.00 mol% to 1.00 mol%, 0.10 mol% to 0.90 mol%, 0.30 mol% to 0.80 mol%, 0.50 mol% to 0.70 mol%, 0.00 mol% to 0.60 mol%, 0.00 mol% to 0.50 mol%, 0.60 mol% to 1.00 mol%, 0.50 mol% to 1.00 mol%, or 0.30 mol% to 0.50 mol% of B₂O₃. In some embodiments, the 3D curved glass-ceramic or the base glass for preparing this 3D curved glass-ceramic can comprise 0.00 mol%, 0.15 mol%, 0.25 mol%, 0.35 mol%, 0.45 mol%, 0.55 mol%, 0.75 mol%, 0.95 mol%, or 1.00 mol% of B₂O₃, or can comprise B₂O₃ within a numerical range constituted by any two of the above specific numerical values as endpoints, as long as the 3D curved glass-ceramic or base glass with the properties required by the present disclosure can be obtained. It should be understood that, in specific embodiments, any of the above ranges can be combined with any other range, as long as the 3D curved glass-ceramic or base glass with the properties required by the present disclosure can be obtained.

In the present disclosure, Na₂O is a network modifier oxide that can provide free oxygen, increase the oxygen-to-silicon ratio in the glass structure, and play a role in regulating crystal grain size, etc.; the presence of an appropriate amount of Na₂O is beneficial to promote the precipitation of the lithium disilicate crystalline phase, reduce the crystallization tendency of the glass, help increase the transmittance of the glass, and also improve the thermal stability, chemical stability, mechanical strength, and weather resistance of the glass. In some embodiments, the 3D curved glass-ceramic or the base glass for preparing this 3D curved glass-ceramic of the present disclosure comprises 0.00 mol% to 1.00 mol% of Na₂O. In some embodiments, the 3D curved glass-ceramic or the base glass for preparing this 3D curved glass-ceramic can comprise 0.00 mol% to 1.00 mol%, 0.20 mol% to 0.90 mol%, 0.40 mol% to 0.80 mol%, 0.00 mol% to 0.40 mol%, 0.00 mol% to 0.50 mol%, 0.00 mol% to 0.40 mol%, 0.40 mol% to 1.00 mol%, 0.30 mol% to 0.50 mol%, or 0.40 mol% to 0.60 mol% of Na₂O. In some embodiments, the 3D curved glass-ceramic or the base glass for preparing this 3D curved glass-ceramic can comprise 0.00 mol%, 0.15 mol%, 0.35 mol%, 0.55 mol%, 0.75 mol%, 0.95 mol%, or 1.00 mol% of Na₂O, or can comprise Na₂O within a numerical range constituted by any two of the above specific numerical values as endpoints, as long as the 3D curved glass-ceramic or base glass with the properties required by the present disclosure can be obtained. It should be understood that, in specific embodiments, any of the above ranges can be combined with any other range, as long as the 3D curved glass-ceramic or base glass with the properties required by the present disclosure can be obtained.

In the present disclosure, K₂O is a network modifier oxide. An appropriate amount of K₂O can reduce the crystallization tendency of the glass and increase the transparency and gloss of the glass. However, when the K₂O content is too high, the crystallization ability of the glass becomes stronger, the glass easily devitrifies, and the crystallized glass becomes prone to breakage. The ionic radius of K⁺ is larger than that of Li⁺, which is the main crystalline phase, making it difficult to enter the crystal lattice, so K⁺ remains in the glass phase after crystallization. Therefore, in some embodiments, the 3D curved glass-ceramic or the base glass for preparing this 3D curved glass-ceramic of the present disclosure comprises 0.00 mol% to 0.50 mol% of K₂O. In some embodiments, the 3D curved glass-ceramic or the base glass for preparing this 3D curved glass-ceramic can comprise 0.00 mol% to 0.50 mol%, 0.10 mol% to 0.40 mol%, 0.20 mol% to 0.30 mol%, 0.00 mol% to 0.20 mol%, 0.30 mol% to 0.50 mol%, 0.10 mol% to 0.20 mol%, or 0.20 mol% to 0.40 mol% of K₂O. In some embodiments, the 3D curved glass-ceramic or the base glass for preparing this 3D curved glass-ceramic can comprise 0.00 mol%, 0.15 mol%, 0.25 mol%, 0.35 mol%, 0.45 mol%, or 0.50 mol% of K₂O, or can comprise K₂O within a numerical range constituted by any two of the above specific numerical values as endpoints, as long as the 3D curved glass-ceramic or base glass with the properties required by the present disclosure can be obtained. It should be understood that, in specific embodiments, any of the above ranges can be combined with any other range, as long as the 3D curved glass-ceramic or base glass with the properties required by the present disclosure can be obtained.

In the present disclosure, CaO is beneficial for increasing the chemical stability and mechanical strength of the glass. CaO reduces the viscosity of the glass, enhances the meltability and formability of the glass, and also helps regulate the thermal expansion coefficient and refractive index of the glass-ceramic. However, when the CaO content is too high, the glass tends to devitrify after crystallization treatment, and excessive CaO remaining in the glass phase creates a refractive index difference with the main crystalline phase, which can lead to a decrease in transmittance and an increase in haze of the glass-ceramic. In some embodiments, the 3D curved glass-ceramic or the base glass for preparing this 3D curved glass-ceramic of the present disclosure comprises 0.00 mol% to 1.60 mol% of CaO. In some embodiments, the 3D curved glass-ceramic or the base glass for preparing this 3D curved glass-ceramic can comprise 0.00 mol% to 1.60 mol%, 0.50 mol% to 1.60 mol%, 0.60 mol% to 1.50 mol%, 0.80 mol% to 1.30 mol%, 1.00 mol% to 1.20 mol%, 0.50 mol% to 1.00 mol%, 0.50 mol% to 0.85 mol%, 0.85 mol% to 1.40 mol%, 1.40 mol% to 1.60 mol%, 0.85 mol% to 1.20 mol%, 1.20 mol% to 1.60 mol%, 0.85 mol% to 1.00 mol%, 0.85 mol% to 0.90 mol%, or 1.00 mol% to 1.30 mol% of CaO. In some embodiments, the 3D curved glass-ceramic or the base glass for preparing this 3D curved glass-ceramic can comprise 0.00 mol%, 0.50 mol%, 0.70 mol%, 0.85 mol%, 1.10 mol%, 1.25 mol%, 1.35 mol%, 1.45 mol%, or 1.60 mol% of CaO, or can comprise CaO within a numerical range constituted by any two of the above specific numerical values as endpoints, as long as the 3D curved glass-ceramic or base glass with the properties required by the present disclosure can be obtained. It should be understood that, in specific embodiments, any of the above ranges can be combined with any other range, as long as the 3D curved glass-ceramic or base glass with the properties required by the present disclosure can be obtained.

In some embodiments, based on the content expressed as the mole percentage of each oxide in the composition of the 3D curved glass-ceramic or the base glass for preparing this 3D curved glass-ceramic, the composition of the 3D curved glass-ceramic or the base glass for preparing this 3D curved glass-ceramic satisfies: 0.100 ≤ P₂O₅ × (CaO + ZrO₂ + Li₂O + Al₂O₃) / (Na₂O + K₂O + B₂O₃) ≤ 2.200, where the chemical formulas in the formula represent the mole percentage of oxides. This is beneficial for forming a 3D curved glass-ceramic with a specific structure and excellent properties (especially forming performance, optical performance, and strength performance). In some embodiments, the value of P₂O₅ × (CaO + ZrO₂ + Li₂O + Al₂O₃) / (Na₂O + K₂O + B₂O₃) can be, for example, 0.100, 0.150, 0.190, 0.200, 0.205, 0.210, 0.250, 0.300, 0.350, 0.380, 0.400, 0.600, 0.800, 1.000, 1.200, 1.400, 1.600, 1.800, 2.000, or 2.200, or can be a value within a numerical range constituted by any two of the above specific numerical values as endpoints, as long as the 3D curved glass-ceramic or base glass with the properties required by the present disclosure can be obtained.

In some embodiments, based on the content expressed as the mole percentage of each oxide in the composition of the 3D curved glass-ceramic or the base glass for preparing this 3D curved glass-ceramic, the composition of the 3D curved glass-ceramic or the base glass for preparing this 3D curved glass-ceramic satisfies: 2.600 ≤ 99 × (CaO + ZrO₂) / (Li₂O + Na₂O + 1000 × K₂O) ≤ 5.000, where the chemical formulas in the formula represent the mole percentage of oxides. This is beneficial for forming a 3D curved glass-ceramic with a specific structure and excellent performance (especially strength performance). In some embodiments, the value of 99 × (CaO + ZrO₂) / (Li₂O + Na₂O + 1000 × K₂O) can be, for example, 2.600, 2.800, 3.000, 3.500, 4.000, or 5.000, or can be a value within a numerical range constituted by any two of the above specific numerical values as endpoints, as long as the 3D curved glass-ceramic or base glass with the properties required by the present disclosure can be obtained.

In some embodiments, based on the content expressed as the mole percentage of each oxide in the composition of the 3D curved glass-ceramic or the base glass for preparing this 3D curved glass-ceramic, the composition of the 3D curved glass-ceramic or the base glass for preparing this 3D curved glass-ceramic satisfies: 12.200 ≤ (5.6 × B₂O₃ + 10 × Al₂O₃ + 6.5 × CaO) / ZrO₂ ≤ 20.000, where the chemical formulas in the formula represent the mole percentage of oxides. This is beneficial for forming a 3D curved glass-ceramic with a specific structure and excellent properties (especially optical and mechanical properties). In some embodiments, the value of (5.6 × B₂O₃ + 10 × Al₂O₃ + 6.5 × CaO) / ZrO₂ can be, for example, 12.200, 13.000, 14.000, 15.000, 16.000, 17.000, 18.000, 19.000, or 20.000, or can be a value within a numerical range constituted by any two of the above specific numerical values as endpoints, as long as the 3D curved glass-ceramic or base glass with the properties required by the present disclosure can be obtained.

In some embodiments, the 3D curved glass-ceramic is transparent within the visible light range. Here, visible light refers to light in the wavelength range of 360 nm to 780 nm. "Transparent within the visible light range" means that the average transmittance under light in the wavelength range of 360 nm to 780 nm is greater than 80%, which can meet the optical performance requirements for front cover display effects. In some embodiments, the average transmittance within the visible light range of the 0.6 mm thick 3D curved glass-ceramic is not less than 90%.

In some embodiments, based on the mole percentage of oxides, the composition of the 3D curved glass-ceramic or the base glass for preparing this 3D curved glass-ceramic comprises: SiO₂: 67.50 mol% to 71.00 mol%, Al₂O₃: 3.50 mol% to 5.00 mol%, P₂O₅: not less than 0.85 mol% and less than 1.50 mol%, ZrO₂: 2.50 mol% to 3.50 mol%, Na₂O: greater than 0.00 mol% and not greater than 1.00 mol%, K₂O: greater than 0.00 mol% and not greater than 0.50 mol%, Li₂O: 20.00 mol% to 25.00 mol%, CaO: greater than 0.50 mol% and not greater than 1.50 mol%, B₂O₃: 0.00 mol% to 1.00 mol%.

In some embodiments, the 3D curved glass-ceramic does not comprise a quartz crystalline phase. The standard XRD diffraction pattern for quartz appearing in glass-ceramics is shown in FIG. 6. In glass-ceramics with petalite and lithium disilicate as the main crystalline phases, if a quartz crystalline phase precipitates, it will adversely affect the optical performance of the glass-ceramic, easily leading to a decrease in transmittance of the glass-ceramic, and also easily making the overall uniformity of the glass-ceramic brick worse, leading to significant differences in b-values between different areas of the glass. The oxide ratios of the present disclosure can enable the base glass to mass-produce 3D curved glass-ceramics without quartz crystalline phases under specific heat treatment process conditions.

In some embodiments, in the 3D curved glass-ceramic, the total content of the petalite crystalline phase and the lithium disilicate crystalline phase accounts for 60.00 wt% or more of the 3D curved glass-ceramic, preferably 70.00 wt% or more, more preferably 80.00 wt% or more. A high content of petalite and lithium disilicate crystalline phases is beneficial for improving the mechanical strength of the 3D curved glass-ceramic. The weight percentage of the total content of petalite and lithium disilicate crystalline phases relative to the glass-ceramic mass can be, for example, 60.00 wt%, 65.00 wt%, 68.00 wt%, 70.00 wt%, 75.00 wt%, 80.00 wt%, 85.00 wt%, 90.00 wt%, 93.00 wt%, 95.00 wt%, 98.00 wt%, or 100.00 wt%, or can be a value within a numerical range constituted by any two of the above specific numerical values as endpoints, as long as the 3D curved glass-ceramic with the properties required by the present disclosure can be obtained. It should be understood that, in specific embodiments, any of the above ranges can be combined with any other range, as long as the 3D curved glass-ceramic with the properties required by the present disclosure can be obtained.

In some embodiments, in the 3D curved glass-ceramic, the petalite crystalline phase accounts for 35.00 wt% to 50.00 wt% of the transparent glass-ceramic mass, and the lithium disilicate crystalline phase accounts for 35.00 wt% to 50.00 wt% of the transparent glass-ceramic mass. In some embodiments, the percentage of lithium disilicate crystalline phase or petalite crystalline phase relative to the transparent glass-ceramic mass can be 35.00 wt% to 50.00 wt%, 35.00 wt% to 45.00 wt%, 35.00 wt% to 40.00 wt%, or 40.00 wt% to 50.00 wt%. In some embodiments, the 3D curved glass-ceramic can comprise 35.00 wt%, 40.00 wt%, 45.00 wt%, or 50.00 wt% of lithium disilicate crystalline phase or petalite crystalline phase, or can comprise lithium disilicate crystalline phase or petalite crystalline phase within a numerical range constituted by any two of the above specific numerical values as endpoints, as long as the 3D curved glass-ceramic with the properties required by the present disclosure can be obtained. It should be understood that, in specific embodiments, any of the above ranges can be combined with any other range, as long as the glass-ceramic with the properties required by the present disclosure can be obtained.

In some embodiments, the 3D curved glass-ceramic comprises one or more selected from the group consisting of lithium metasilicate (Li₂SiO₃) crystalline phase, lithium phosphate (Li₃PO₄) crystalline phase, and spodumene crystalline phase as secondary crystalline phases. In some embodiments, in the 3D curved glass-ceramic, the secondary crystalline phases account for 20.00 wt% or less of the transparent glass-ceramic mass. The low content of secondary crystalline phases in the 3D curved glass-ceramic of the present disclosure is more conducive to ensuring a high content of main crystalline phases, thereby ensuring the excellent mechanical strength performance of the glass-ceramic. In some embodiments, the lithium phosphate (Li₃PO₄) crystalline phase is usually accompanied by the growth of secondary phases such as lithium metasilicate (Li₂SiO₃), as shown in FIG. 5.

In some embodiments, in the transparent 3D curved glass-ceramic, the lithium metasilicate crystalline phase accounts for 8.00 wt% or less of the transparent glass-ceramic mass, and the total amount of lithium phosphate crystalline phase and spodumene crystalline phase accounts for 8.00 wt% or less of the transparent glass-ceramic mass.

In some embodiments, in the 3D curved glass-ceramic, the average crystal size does not exceed 100 nm, for example, it can be 10 nm, 20 nm, 30 nm, 40 nm, 50 nm, 60 nm, 70 nm, 80 nm, 90 nm, or 100 nm, or can be a value within a numerical range constituted by any two of the above specific numerical values as endpoints, as long as the 3D curved glass-ceramic with the properties required by the present disclosure can be obtained. It should be understood that, in specific embodiments, any of the above ranges can be combined with any other range, as long as the transparent 3D curved glass-ceramic with the properties required by the present disclosure can be obtained.

In some embodiments, the degree of crystallization of the 3D curved glass-ceramic is ≥ 70.00 wt%, preferably the degree of crystallization is ≥ 80.00 wt%, which is beneficial for improving the mechanical strength performance of the glass-ceramic. Here, "degree of crystallization" refers to the percentage of the content of all crystalline phases or crystals in the 3D curved glass-ceramic relative to the mass of the 3D curved glass-ceramic, for example, it can be 70.00 wt%, 80.00 wt%, 85.00 wt%, 90.00 wt%, 93.00 wt%, 95.00 wt%, 98.00 wt%, or 100.00 wt%, or can be a value within a numerical range constituted by any two of the above specific numerical values as endpoints, as long as the 3D curved glass-ceramic with the properties required by the present disclosure can be obtained. It should be understood that, in specific embodiments, any of the above ranges can be combined with any other range, as long as the 3D curved glass-ceramic with the properties required by the present disclosure can be obtained.

In some embodiments, at a thickness of 0.6 mm, the optical b-value of the 3D curved glass-ceramic is ≤ 1.00, preferably the optical b-value is ≤ 0.70, more preferably the optical b-value is ≤ 0.55. The b-value here refers to the b-value at any location of the glass-ceramic. In some embodiments, the optical b-value of the 3D curved glass-ceramic at this thickness can be 0, 0.01, 0.02, 0.03, 0.04, 0.05, 0.06, 0.07, 0.08, 0.09, 0.10, 0.20, 0.30, 0.40, 0.50, 0.60, 0.70, 0.80, 0.90, or 1.00, or can be a value within a numerical range constituted by any two of the above specific numerical values as endpoints, as long as the 3D curved glass-ceramic with the properties required by the present disclosure can be obtained. It should be understood that, in specific embodiments, any of the above ranges can be combined with any other range, as long as the 3D curved glass-ceramic with the properties required by the present disclosure can be obtained.

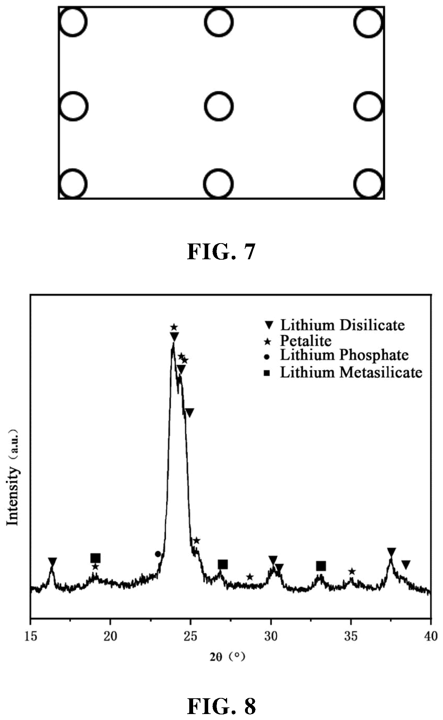

The nine locations are as shown in FIG. 7, respectively: (1) four locations corresponding to test circles I close to four corners of the main surface; (2) four locations corresponding to test circles II each centered at points on line segments connecting centers of the four test locations of test circles I, the points being closest to midpoints of long sides or short sides of the main surface; (3) one location corresponding to test circle III centered at a center point of the main surface. The diameter of the test circles depends on the size of the instrument's test window (which is circular).

In some embodiments, at a thickness of 0.6 mm, the difference between the maximum b-value and the minimum b-value measured at nine locations on the main surface of the 3D curved glass-ceramic is ≤ 0.30, preferably the difference between the maximum b-value and the minimum b-value measured at nine locations on the main surface is ≤ 0.10, more preferably the difference between the maximum b-value and the minimum b-value measured at nine locations on the main surface is ≤ 0.06. In some embodiments, the difference between the maximum b-value and the minimum b-value measured at nine locations on the main surface of the 3D curved glass-ceramic at this thickness can be 0, 0.01, 0.02, 0.03, 0.04, 0.05, 0.06, 0.07, 0.08, 0.09, 0.10, 0.20, 0.25, or 0.30, or can be a value within a numerical range constituted by any two of the above specific numerical values as endpoints. It should be understood that, in specific embodiments, any of the above ranges can be combined with any other range, as long as the 3D curved glass-ceramic with the properties required by the present disclosure can be obtained.

In some embodiments, when the thickness of the 3D curved glass-ceramic is 0.6 mm, the haze is ≤ 0.20%, and at a wavelength of 550 nm, the transmittance of the glass-ceramic is ≥ 90.00%. In some embodiments, the transmittance at 550 nm wavelength for a 0.6 mm thick glass-ceramic can be 90.00%, 90.50%, 91.00%, 92.00%, 93.00%, 94.00%, 95.00%, 96.00%, 97.00%, 98.00%, 99.00%, or 100.00%, or a transmittance within a numerical range constituted by any two of the above specific numerical values as endpoints. It should be understood that, in specific embodiments, any of the above ranges can be combined with any other range, as long as the glass-ceramic with the properties required by the present disclosure can be obtained.

As mentioned above, the difference between the maximum b-value and the minimum b-value measured at nine locations on the main surface of the 3D curved glass-ceramic produced in batches in the present disclosure is small, meaning the b-values in different areas of the 3D curved glass-ceramic are close; moreover, the transmittance of the 3D curved glass-ceramic of the present disclosure is high, the b-value is low, and the haze is low. This indicates that the 3D curved glass-ceramic produced in batches from the production line in the present disclosure has relatively good optical performance and good display uniformity, meeting the present disclosure requirements for display screen cover plates.

The present disclosure also provides a base glass, which can be used to prepare the aforementioned 3D curved glass-ceramic, wherein, based on the mole percentage of oxides, the composition of the base glass is the same as that of the aforementioned 3D curved glass-ceramic.

In some embodiments, as tested by simultaneous thermal analysis, under a protective atmosphere of nitrogen, the base glass is heated from room temperature to 900 °C at a heating rate of 10 °C/min to obtain a heating DSC curve. In this heating DSC curve, there are at least two exothermic peaks, wherein the first exothermic peak temperature T₁ is 600 °C to 730 °C, the second exothermic peak temperature T₂ is 740 °C to 800 °C, and T₁ and T₂ satisfy the relational expression: 100°C ≥ T₂ - T₁ ≥ 40°C, preferably 80°C ≥ T₂ - T₁ ≥ 50°C.

In some embodiments, within the temperature range from T_{g} to T₂, the upper precipitation limit temperature Tₘₐₓ (Li₂SiO₃) of the lithium metasilicate crystalline phase and the upper precipitation limit temperature Tₘₐₓ (SiO₂) of the quartz crystalline phase in the base glass were tested, and Tₘₐₓ (Li₂SiO₃) ≥ Tₘₐₓ (SiO₂), wherein T_{g} is the glass transition temperature of the base glass. Here, T₂ is the second exothermic peak temperature in the aforementioned heating DSC curve.

Large-sized base glass bricks made using the specific base glass satisfying specific thermal properties, when subjected to heat treatment under mass production line process conditions for 3D curved glass-ceramics, can produce preformed glass-ceramic bricks with uniform b-value distribution. Planar glass-ceramic products sliced from these preformed glass-ceramic bricks can be hot-bent to obtain 3D curved glass-ceramics with good display effects. Moreover, by making the base glass satisfy, within a specific temperature range, that the upper precipitation limit temperature Tₘₐₓ (SiO₂) of the quartz crystalline phase is lower than the upper precipitation limit temperature Tₘₐₓ (Li₂SiO₃) of the lithium metasilicate crystalline phase, it can be ensured that under specific heat treatment process conditions, which are used to prepare preformed glass-ceramics with petalite and lithium disilicate as the main crystalline phases, the precipitation of the quartz crystalline phase is effectively avoided. Combined with the subsequent hot-bending process, the lithium metasilicate crystalline phase can also be transformed into the desired lithium disilicate crystalline phase, thereby avoiding the adverse effects of the quartz crystalline phase and lithium metasilicate crystalline phase on the optical effect of the glass-ceramic.

Before preparing large-sized preformed glass-ceramic bricks, small samples of base glass can be made according to the glass formulation. By obtaining the above characteristics, it can be first verified whether the glass is suitable for mass-producing qualified 3D curved glass-ceramic products on the production line. If not, adjustments can be made in time, thereby greatly saving time and cost and effectively avoiding waste of resources.

In some embodiments, based on the mole percentage of oxides, the composition of the 3D curved glass-ceramic or the base glass for preparing this 3D curved glass-ceramic comprises:
SiO₂: 67.50 mol% to 71.00 mol%, Al₂O₃: 3.50 mol% to 5.00 mol%, P₂O₅: not less than 0.85 mol% and less than 1.50 mol%, ZrO₂: 2.50 mol% to 3.50 mol%, Na₂O: greater than 0.00 mol% and not greater than 1.00 mol%, K₂O: greater than 0.00 mol% and not greater than 0.50 mol%, Li₂O: 20.00 mol% to 25.00 mol%, CaO: greater than 0.50 mol% and not greater than 1.50 mol%, B₂O₃: 0.00 mol% to 1.00 mol%;
based on the content expressed as the mole percentage of each oxide in the composition of the 3D curved glass-ceramic or the base glass for preparing this 3D curved glass-ceramic, the composition of the 3D curved glass-ceramic or the base glass for preparing this 3D curved glass-ceramic satisfies: $0.180 \leq 5 \times {P}_{2} {O}_{5} / \left({Li}_{2}O+0.5\times {Al}_{2}{O}_{3}\right) \leq 0.250 ;$ $18.200 \leq {Li}_{2} O / {P}_{2} {O}_{5} \leq 25.500 ;$ $0.190 \leq {P}_{2} {O}_{5} \times \left(CaO+{ZrO}_{2}+{Li}_{2}O+{Al}_{2}{O}_{3}\right) / \left({Na}_{2}O+{K}_{2}O+{B}_{2}{O}_{3}\right) \leq 2.200 ;$ $1.500 \leq 10 \times \left({ZrO}_{2}+{P}_{2}{O}_{5}\right) / {Li}_{2} O \leq 2.000 ;$ $4.000 \leq \left({SiO}_{2}-7\times {Al}_{2}{O}_{3}-{Li}_{2}O\right) / \left({P}_{2}{O}_{5}+{ZrO}_{2}\right) \leq 6.000 ;$ $2.600 \leq 99 \times \left(CaO+{ZrO}_{2}\right) / \left({Li}_{2}O+{Na}_{2}O+1000\times {K}_{2}O\right) \leq 5.000 ;$ $12.200 \leq \left(5.6\times {B}_{2}{O}_{3}+10\times {Al}_{2}{O}_{3}+6.5\times CaO\right) / {ZrO}_{2} \leq 20.000 .$

The present disclosure also provides a preparation method for a 3D curved glass-ceramic, comprising the following steps:
(1) Performing heat treatment on the aforementioned base glass to obtain a preformed glass-ceramic product comprising a lithium metasilicate crystalline phase, a lithium disilicate crystalline phase, and a petalite crystalline phase, with a degree of crystallization not less than 60.00 wt%;
(2) Processing the preformed glass-ceramic product obtained in step (1) into flat glass-ceramic sheets of the required specification size, and performing hot-bending treatment on the obtained flat glass-ceramic sheets to obtain a 3D curved glass-ceramic, wherein the 3D curved glass-ceramic comprises a petalite crystalline phase and a lithium disilicate crystalline phase, and the petalite crystalline phase and the lithium disilicate crystalline phase have a higher weight percentage than other crystalline phases present in the glass-ceramic.

In some embodiments, during the process of preparing the 3D curved glass-ceramic of the present disclosure, it may also comprise the step of subjecting the preformed glass-ceramic product (e.g., brick) obtained by heat-treating the base glass to conventional cold working to obtain flat glass-ceramic sheets of the required specification size (e.g., thickness of 0.2 mm to 2.0 mm), followed by performing the aforementioned step (2) hot-bending treatment. The cold working here includes but is not limited to shaping treatment, slicing treatment, CNC treatment, grinding treatment, polishing treatment, and other methods commonly used in the field. Those skilled in the art can select one or more selected from the group consisting of the above methods for cold working of the glass-ceramic according to actual needs.

In the present disclosure, the hot-bending process may simultaneously be accompanied by further crystallization of the preformed glass-ceramic product, resulting in a degree of crystallization of the finally prepared 3D curved glass-ceramic being not less than that of the preformed glass-ceramic product.

In the present disclosure, the degree of crystallization of the preformed glass-ceramic product prepared by heat-treating the base glass is 60 wt% to 90 wt%, preferably 65 wt% to 90 wt%; the degree of crystallization of the 3D curved glass-ceramic prepared by hot-bending the preformed glass-ceramic product is 70 wt% to 99 wt%, preferably 80 wt% to 99 wt%.

In the present disclosure, the conditions for the heat treatment in the above step (1) have a relatively wide optional range, and those skilled in the art can choose according to actual needs in the prior art. In some embodiments, in step (1), the heat treatment comprises nucleation treatment and crystallization treatment, wherein the temperature of the nucleation treatment is (Tg - 20 °C) to (Tg + 40 °C), the time of the nucleation treatment is 0 min to 6000 min, the temperature of the crystallization treatment is (T₁ - 50 °C) to T₁, the time of the crystallization treatment is 30 min to 6000 min; Tg is the glass transition temperature of the base glass, T₁ is the first exothermic peak temperature in the heating DSC curve of the base glass; in step (1), the heating rate during the heat treatment process is 5 °C/min to 15 °C/min. It should be understood that, in the present disclosure, the nucleation treatment refers to heating to the specified nucleation treatment temperature (also called nucleation temperature), and after reaching the nucleation treatment temperature, holding for a given time. The holding time here is the time of the nucleation treatment (also called nucleation time). The crystallization treatment refers to heating to the specified crystallization treatment temperature (also called crystallization temperature), and after reaching the crystallization treatment temperature, holding for a given time. The holding time here is the time of the crystallization treatment (also called crystallization time). Using the above heat treatment process conditions is beneficial for preparing preformed glass-ceramic products with specific microstructure and uniform structure. These preformed glass-ceramic products can be used for hot-bending treatment to prepare 3D curved glass-ceramics with petalite and lithium disilicate as the main crystalline phases and excellent optical and mechanical properties.

In some embodiments, in step (1), the heat treatment comprises nucleation treatment and crystallization treatment, wherein the temperature of the nucleation treatment is (Tg - 20 °C) to (Tg + 40 °C), for example, it can be (Tg - 20 °C), (Tg - 15 °C), (Tg - 10 °C), (Tg - 5 °C), (Tg - 2 °C), Tg, (Tg + 2 °C), (Tg + 5 °C), (Tg + 10 °C), (Tg + 15 °C), or (Tg + 40 °C), or any value between these adjacent point values. Among them, Tg is the glass transition temperature of the base glass.

In some embodiments, in step (1), the time of the nucleation treatment is 30 min to 6000 min, for example, it can be 30 min, 50 min, 70 min, 100 min, 130 min, 150 min, 180 min, 200 min, 250 min, 280 min, 300 min, 330 min, 360 min, 600 min, 1000 min, 2000 min, 3000 min, 4000 min, 5000 min, or 6000 min, or any value between these adjacent point values.

In some embodiments, in step (1), the temperature of the crystallization treatment is (T₁ - 50 °C) to T₁, for example, it can be (T₁ - 50 °C), (T₁ - 45 °C), (T₁ - 40 °C), (T₁ - 35 °C), (T₁ - 30 °C), (T₁ - 25 °C), (T₁ - 20 °C), (T₁ - 15 °C), (T₁ - 10 °C), (T₁ - 5 °C), or T₁, or any value between these adjacent point values.

In some embodiments, in step (1), the time of the crystallization treatment is 30 min to 6000 min, for example, it can be 30 min, 50 min, 70 min, 100 min, 130 min, 150 min, 180 min, 200 min, 250 min, 280 min, 300 min, 330 min, 360 min, 400 min, 450 min, 500 min, 550 min, 600 min, 1000 min, 2000 min, 3000 min, 4000 min, 5000 min, or 6000 min, or any value between these adjacent point values.

In some embodiments, in step (1), the heating rate during the heat treatment process is 5 °C/min to 15 °C/min, for example, it can be 5 °C/min, 8 °C/min, 10 °C/min, 12 °C/min, 14 °C/min, or 15 °C/min, or any value between these adjacent point values. Here, "heating rate" comprises the heating rate during the entire heat treatment process, i.e., comprising the heating rate during the nucleation treatment process and the heating rate during the crystallization treatment process.

In some embodiments, in the above step (2), the hot-bending treatment process comprises at least 3 preheating stations, at least 3 hot-pressing stations, and at least 3 cooling stations; the temperature of the preheating stations is 500 °C to 850 °C, the temperature of the hot-pressing stations is 700 °C to 900 °C, the pressure at the hot-pressing stations is 0 MPa to 1 MPa, and the temperature of the cooling stations is 500 °C to 800 °C. In the present disclosure, for each type of station among preheating stations, hot-pressing stations, and cooling stations, the conditions (such as temperature, pressure) of the stations of that type may be the same or different from one another. For example, the temperatures of the preheating stations can be the same or different.

In some embodiments, the temperature of the preheating stations is 500 °C to 850 °C, for example, it can be 500 °C, 600 °C, 700 °C, 800 °C, or 850 °C, or any value between these adjacent point values.

In some embodiments, the temperature of the hot-pressing stations is 700 °C to 900 °C, for example, it can be 700 °C, 750 °C, 800 °C, 850 °C, or 900 °C, or any value between these adjacent point values.

In some embodiments, the pressure of the hot-pressing stations is 0 MPa to 1 MPa, for example, it can be 0 MPa, 0.1 MPa, 0.2 MPa, 0.3 MPa, 0.4 MPa, 0.5 MPa, 0.6 MPa, 0.7 MPa, 0.8 MPa, 0.9 MPa, or 1 MPa, or any value between these adjacent point values.

In some embodiments, the temperature of the cooling stations is 500 °C to 800 °C, for example, it can be 500 °C, 600 °C, 700 °C, or 800 °C, or any value between these adjacent point values.

In some embodiments, the working time of preheating station is 90 s to 360 s, the working time of hot-pressing station is 90 s to 360 s, and the working time of cooling station is 90 s to 360 s. Among them, the working time of each station is 90 s to 360 s, for example, it can be 90 s, 100 s, 110 s, 150 s, 200 s, 250 s, 300 s, 350 s, or 360 s, or any value between these adjacent point values.

The present disclosure also provides a chemically strengthened glass-ceramic, wherein the composition at the center of the chemically strengthened glass-ceramic is substantially the same as the composition of the aforementioned 3D curved glass-ceramic, the chemically strengthened glass-ceramic comprises a compressive stress layer region extending from the surface of the chemically strengthened glass-ceramic to a depth of compression, and has tensile stress inside the chemically strengthened glass-ceramic.

It should be understood that after chemical strengthening treatment, the composition at the surface of the glass-ceramic may be different from that of the freshly formed glass-ceramic (i.e., the glass-ceramic that has not undergone chemical strengthening treatment). This is because during chemical strengthening treatment, ion exchange occurs on the surface of the glass-ceramic, where one type of alkali metal ion in the freshly formed glass-ceramic (e.g., Li⁺ or Na⁺) is replaced by larger alkali metal ions (e.g., Na⁺ or K⁺), respectively. For example, Na⁺ in the glass-ceramic exchanges with K⁺ in the molten salt bath and is replaced by K⁺, and/or Li⁺ in the glass-ceramic exchanges with Na⁺ in the molten salt bath and is replaced by Na⁺. However, in embodiments, the composition and phase assemblage at the center or near the center of the depth of the glass article will still have the composition and phase assemblage of the freshly formed glass-ceramic. That is, in the chemically strengthened glass-ceramic of the present disclosure, the composition of the compressive stress layer formed by ion exchange on the surface may be different from that of the unstrengthened 3D curved glass-ceramic, while the composition at the center of the chemically strengthened glass-ceramic with internal tensile stress (also called tensile stress) will still have the composition of the unstrengthened glass-ceramic.

The conditions for the chemical strengthening treatment used in preparing the chemically strengthened glass-ceramic from the 3D curved glass-ceramic in the present disclosure have a relatively wide optional range, and those skilled in the art can choose according to actual needs. For example, in some embodiments, the chemical strengthening treatment uses a mixed molten salt bath, the composition of the mixed molten salt comprises: 0 < NaNO₃ < 100 wt%, 0 < KNO₃ < 100 wt%, and 0 < LiNO₃ ≤ 0.2 wt%. In some embodiments, the temperature of the chemical strengthening treatment salt bath is 430 °C to 530 °C, and the chemical strengthening treatment time is 0.5 h to 15.0 h.

In some embodiments, the chemically strengthened glass-ceramic has a CS_50 of 110 MPa to 200 MPa, where CS_50 refers to the compressive stress value at a depth of 50 µm from the main surface of the chemically strengthened glass-ceramic. The CS_50 of this chemically strengthened glass-ceramic being within the above range indicates that the compressive stress at a depth of 50 µm from the surface of the chemically strengthened glass-ceramic is high, meaning the chemically strengthened glass-ceramic has a high surface stress level. A higher surface compressive stress level can offset more residual energy from drop impacts, and it further ensures its excellent damage resistance.

In some embodiments, the depth of the compressive stress layer DOL_0 of the chemically strengthened glass-ceramic is 0.18t to 0.25t, where t is the thickness of the chemically strengthened glass-ceramic. The DOL_0 of this chemically strengthened glass-ceramic being within the above range indicates that the chemically strengthened glass-ceramic has a high depth of compressive stress layer, which is more beneficial for it to offset the energy driving crack propagation, thereby ensuring its excellent damage resistance.

In some embodiments, the chemically strengthened glass-ceramic has a |CT_AV| of 84 MPa to 140 MPa, where |CT_AV| refers to the absolute value of the average tensile stress. For example, the chemically strengthened glass-ceramic can have a |CT_AV| of 84 MPa to 140 MPa, 85 MPa to 140 MPa, 85 MPa to 120 MPa, 85 MPa to 100 MPa, 90 MPa to 140 MPa, 100 MPa to 140 MPa, or 120 MPa to 140 MPa. The |CT_AV| of this chemically strengthened glass-ceramic being within the above range indicates that the chemically strengthened glass-ceramic has a high tensile stress level, reflecting its high surface stress level. A higher surface compressive stress level can offset more residual energy from drop impacts, thereby ensuring its excellent damage resistance.

Satisfying specific stress characteristics is able to ensure that the chemically strengthened glass-ceramic has excellent mechanical strength performance/mechanical performance, especially excellent drop resistance.

In some embodiments, using 120-mesh sandpaper, multiple fixed-point height drop tests were performed on the chemically strengthened glass-ceramic with a thickness of 0.6 mm. The fixed-point drop height for the test was 1.0 m. The number of drops until breakage for this chemically strengthened glass-ceramic was ≥ 30, preferably ≥ 50. This indicates that the chemically strengthened glass-ceramic of the present disclosure has excellent drop resistance.

In some embodiments, the surface Na₂O concentration of the chemically strengthened glass-ceramic is 5.0 wt% to 20.0 wt%. For example, the surface Na₂O concentration of the chemically strengthened glass-ceramic can be 5.0 wt%, 6.0 wt%, 7.0 wt%, 8.0 wt%, 9.0 wt%, 10.0 wt%, 11.0 wt%, 12.0 wt%, 13.0 wt%, 14.0 wt%, 15.0 wt%, 16.0 wt%, 17.0 wt%, 18.0 wt%, 19.0 wt%, or 20.0 wt%, or can be a value within a numerical range constituted by any two of the above specific numerical values as endpoints. By satisfying the above range of surface Na₂O concentration, not only can a better surface stress level of the chemically strengthened glass-ceramic be ensured, but also better weather resistance and chemical durability of the chemically strengthened glass-ceramic can be ensured.

The 3D curved glass-ceramic or chemically strengthened glass-ceramic provided by the present disclosure with excellent optical and mechanical properties can be used in any glass device requiring glass-ceramics and for many applications.

The present disclosure also provides a glass device, wherein the glass device comprises the aforementioned 3D curved glass-ceramic or comprises the aforementioned chemically strengthened glass-ceramic.

The present disclosure also provides an electronic apparatus, wherein the electronic apparatus comprises the aforementioned 3D curved glass-ceramic or comprises the aforementioned chemically strengthened glass-ceramic.

The 3D curved glass-ceramic or chemically strengthened glass-ceramic provided by the present disclosure with excellent properties can be used in any glass device requiring glass-ceramics and for many applications. For example, worktops, other surfaces, covers for electronic apparatuses or electronic equipment, appliance doors, floor tiles, wall panels, storage containers, etc. Other surfaces may include but are not limited to exterior wall surfaces, stair tread surfaces, column veneers, countertop surfaces, etc. The types of electronic apparatuses or electronic equipment may include but are not limited to handheld, desktop-mounted, and wall-mounted, etc. Covers may include but are not limited to mobile phone cover plates, mobile phone back plates, tablet computer cover plates, etc. Storage containers may include but are not limited to plates, beverage bottles, etc.

In some embodiments of the present disclosure, the 3D curved glass-ceramic or chemically strengthened glass-ceramic can be of uniform thickness or non-uniform thickness. Those skilled in the art can choose according to needs. "Non-uniform thickness" here means that the 3D curved glass-ceramic or chemically strengthened glass-ceramic comprises at least two parts with different thicknesses.

The embodiments of the present disclosure are described in detail below. They are exemplary and are only used to explain the present disclosure and should not be construed as limiting the present disclosure. In the instance numbers in the following tables, S refers to Example, such as S1 refers to Example 1; D refers to Comparative Example, such as D1 refers to Comparative Example 1.

### Example 1

(1) Preparation of base glass: Raw materials were prepared according to the oxide ratios of S1 in Table 1. The base glass was produced using a continuous melting method to obtain a base glass (brick) with a specification of 360 mm (length) × 180 mm (width) × 30 mm (thickness). Table 2 shows the calculation results of the oxide content relationships in Table 1.

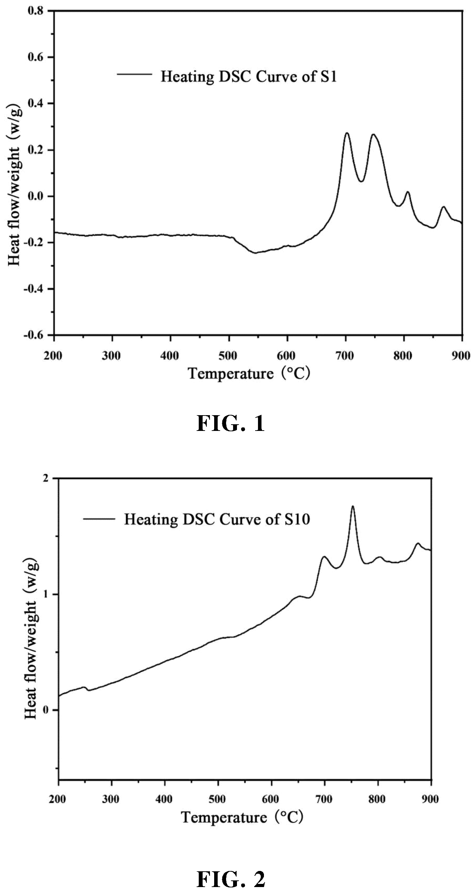

Testing of the base glass obtained in S1:
I. By observation, the base glass prepared in S1 was overall clear and transparent.
II. The Tg and heating DSC curve of the base glass in S1 were determined. The first exothermic peak temperature T₁, the second exothermic peak temperature T₂, and their difference data in the heating DSC curve were recorded, as shown in Table 3 and FIG. 1, respectively. No exothermic or endothermic peaks appeared under temperature conditions not involved.
III. Within the temperature range from T_{g} to T₂, the upper precipitation limit temperature Tₘₐₓ (Li₂SiO₃) of the lithium metasilicate crystalline phase and the upper precipitation limit temperature Tₘₐₓ (SiO₂) of the quartz crystalline phase in the obtained base glass were tested. Tₘₐₓ (Li₂SiO₃) and Tₘₐₓ (SiO₂) are shown in Table 3, respectively, where T_{g} is the glass transition temperature of the base glass.

(2) Preparation of preformed glass-ceramic: A heat treatment roller kiln line was used to produce the preformed glass-ceramic brick from the base glass through a heat treatment process. The heat treatment process is shown in Table 4, comprising nucleation treatment and crystallization treatment performed sequentially (recorded as heat treatment process C). The heating rate during the heat treatment process was 10 °C/min. After leaving the furnace, the preformed glass-ceramic brick was obtained. Based on the oxide content, the composition of the prepared preformed glass-ceramic was the same as that of the base glass, as detailed in Table 1.

Testing of the preformed glass-ceramic brick obtained in S1:
I. By observation, the obtained glass-ceramic brick in S1 was overall clear and transparent.
II. The crystalline phase composition, crystalline phase content, and degree of crystallization in the preformed glass-ceramic were tested. The results are shown in Table 4.
III. The difference between the maximum b-value and the minimum b-value measured at nine locations on the main surface of the preformed glass-ceramic with a specification of 360 mm (length) × 180 mm (width) × 30 mm (thickness) was tested. The results are shown in Table 4.

(3) Cold working treatment of the preformed glass-ceramic brick: The above preformed glass-ceramic brick was subjected to cold working treatment. The cold working treatment comprised shaping treatment, slicing treatment, CNC processing treatment, grinding treatment, and polishing treatment performed sequentially to obtain flat glass-ceramic sheets with a specification of 170 mm (length) × 80 mm (width) × 0.6 mm (thickness). The difference between the maximum b-value and the minimum b-value measured at nine locations on the main surface and the average of the b-values at nine locations of the obtained flat glass-ceramic sheets were tested. The results are shown in Table 4.

(4) Preparation of 3D curved glass-ceramic: The obtained flat glass-ceramic sheets were placed in a 3D hot-bending machine for hot-bending treatment to form the 3D curved glass-ceramic. The hot-bending machine station used in this process was divided into three temperature zones: a preheating zone, a hot-pressing zone, and a slow cooling zone. The hot-bending treatment process (recorded as hot-bending process C1) comprised 3 preheating stations, 3 hot-pressing stations, and 3 cooling stations, respectively; the temperatures of the sequentially set 3 preheating stations were 590 °C, 680 °C, and 790 °C, respectively; the temperatures and pressures of the sequentially set 3 hot-pressing stations were 790 °C/0.4 MPa, 790 °C/0.4 MPa, and 790 °C/0.2 MPa, respectively; the temperatures of the sequentially set 3 cooling stations were 790 °C, 650 °C, and 600 °C, respectively; the residence time at each station was 90 s. Based on the oxide content, the composition of the prepared 3D curved glass-ceramic was the same as that of the base glass, as detailed in Table 1.

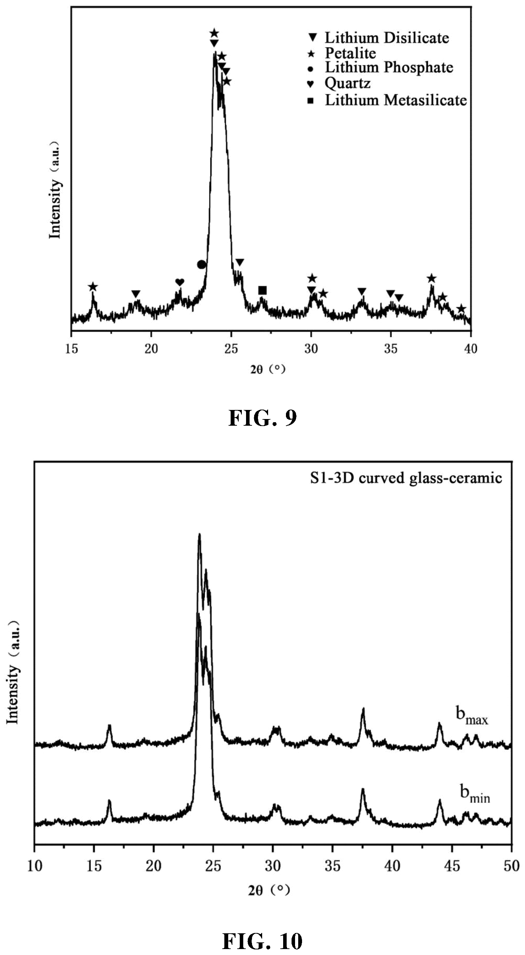

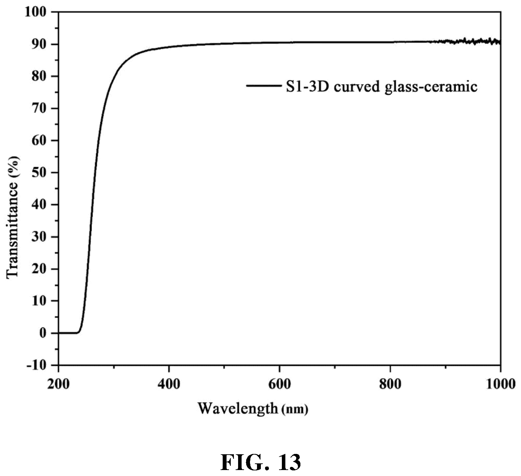

Testing of the 3D curved glass-ceramic obtained in S1:
I. The optical performance of this 3D curved glass-ceramic were tested, comprising the difference between the maximum b-value and the minimum b-value measured at nine locations on the main surface of the 3D curved glass-ceramic sample sheet and the average of b-values at nine locations. The test results are shown in Table 4.
II. The crystalline phase composition in the 3D curved glass-ceramic was tested. The results are shown in Table 4. After calculation, the average crystal size in this 3D curved glass-ceramic was 19 nm.
III. The XRD diffraction curves at the location with the maximum b-value and the location with the minimum b-value during the b-values at nine locations testing of this 3D curved glass-ceramic sheet were tested. The comparison is shown in FIG. 10. As can be seen from FIG. 10, the crystal structure at the location with the maximum b-value and the location with the minimum b-value on the main surface of this glass-ceramic sheet was basically the same or had very little difference. This indicates that the 3D curved glass-ceramic sheet is relatively uniform overall, and the optical display effect tends to be consistent.
IV. The transmittance of this 3D curved glass-ceramic was tested, as shown in FIG. 13. It can be seen that the 3D curved glass-ceramic of the present disclosure has high transmittance in the visible light band range and excellent light transmission.

(5) Preparation of chemically strengthened glass-ceramic: The 3D curved glass-ceramic with a specification of 170 mm (length) × 80 mm (width) × 0.6 mm (thickness) obtained in step (4) was placed in a mixed nitrate salt bath at 470 °C comprising 70.00 wt% KNO₃ + 30.00 wt% NaNO₃ + 0.03 wt% LiNO₃ (here, based on the total amount of NaNO₃ and KNO₃ in the mixed molten salt, the mixed molten salt comprises 0.03 wt% LiNO₃) and treated for 7.0 h to obtain the chemically strengthened glass-ceramic, t = 0.6 mm.

Testing of the chemically strengthened glass-ceramic obtained in S1: A stress tester was used to test the CS_50, |CT_AV|, and DOL_0 of the chemically strengthened glass-ceramic. The obtained chemically strengthened glass-ceramic was subjected to a 1.0 m fixed-point height drop resistance test using 120-mesh sandpaper; the test data are shown in Table 5, respectively.

### Examples 2 to 13

Each was carried out with reference to Example 1, with the hot-bending treatment process being the same as in Example 1. The differences are that the raw material compositions and corresponding test results of each example are shown in Tables 1 to 5, respectively.

The 3D curved glass-ceramics of Examples 2 to 13 all satisfy: in appearance, they are overall clear and transparent; the main crystalline phases of the 3D curved glass-ceramic are Li₂Si₂O₅ and LiAlSi₄O₁₀, and no quartz crystalline phase is present. After calculation, the average crystal size in the 3D curved glass-ceramics of Examples 2 to 13 is between 10 nm and 50 nm.

The XRD diffraction pattern of the base glass of Example 2 after being subjected to heat treatment process C before hot-bending is shown in FIG. 8. Furthermore, the heating DSC curve measured for the base glass of Example 10 is shown in FIG. 2.

### Comparative Examples 1 to 13

Each was carried out with reference to Example 1, with the hot-bending treatment process being the same as in Example 1. The differences are that the raw material compositions and corresponding test results of each comparative example are shown in Tables 6 to 11, respectively.

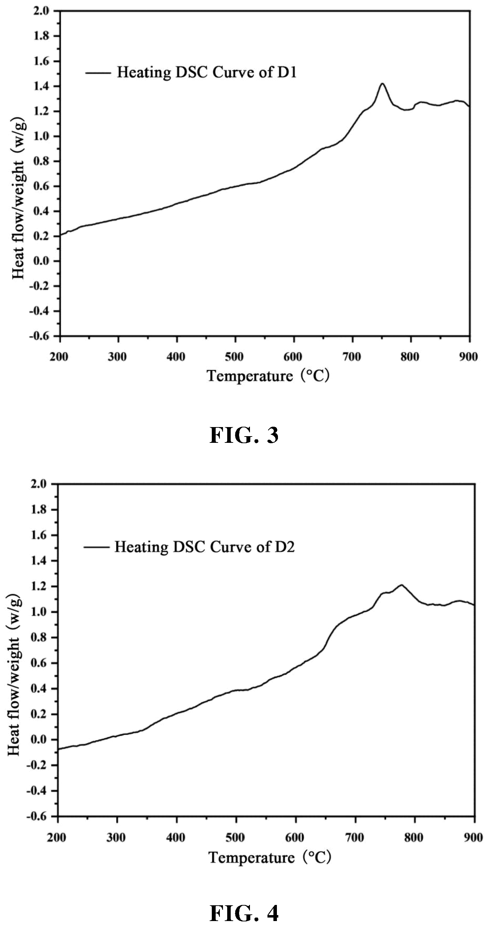

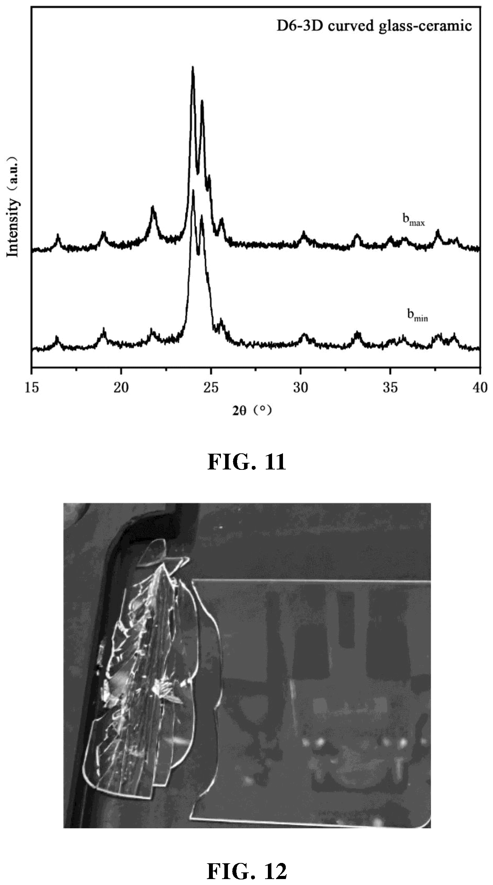

Among them, the heating DSC curve of Comparative Example 1 is shown in FIG. 3. The heating DSC curve of Comparative Example 2 is shown in FIG. 4, and the XRD diffraction pattern of the base glass of Comparative Example 2 after being subjected to heat treatment process C is shown in FIG. 9. A comparison of the XRD diffraction curves at the location with the maximum b-value and the location with the minimum b-value during the b-values at nine locations testing of the glass-ceramic sheet of Comparative Example 6 is shown in FIG. 11. As can be seen from the figure, there is a clear difference in the crystal structure at the location with the maximum b-value and the location with the minimum b-value on the main surface of this 3D curved glass-ceramic sheet. This indicates that the microstructure of different areas of this 3D curved glass-ceramic sheet is inconsistent, which will cause differences in its overall display effect, resulting in local coloration and/or overall uneven coloration on the main surface. The preformed glass-ceramic of Comparative Example 7 cracked during the 3D hot-bending molding process, as shown in FIG. 12.

After calculation, the average crystal size in the 3D curved glass-ceramics of Comparative Examples 1 to 12 is greater than 20 nm.

**Table 1**

| Composition (mol%) | SiO₂ | Al₂O₃ | P₂O₅ | ZrO₂ | Na₂O | K₂O | Li₂O | CaO | B₂O₃ |
|---|---|---|---|---|---|---|---|---|---|
| S1 | 68.48 | 4.26 | 0.95 | 2.66 | 0.84 | 0.08 | 21.53 | 0.85 | 0.35 |
| S2 | 70.35 | 4.17 | 1.02 | 2.67 | 0.33 | 0.05 | 20.28 | 0.84 | 0.29 |
| S3 | 68.01 | 4.03 | 1.00 | 2.58 | 0.29 | 0.08 | 23.10 | 0.77 | 0.14 |
| S4 | 69.20 | 4.15 | 1.15 | 2.50 | 0.30 | 0.09 | 21.60 | 0.82 | 0.19 |
| S5 | 69.08 | 4.08 | 1.00 | 2.60 | 0.68 | 0.10 | 21.35 | 0.80 | 0.31 |
| S6 | 68.86 | 4.05 | 1.03 | 2.65 | 0.28 | 0.09 | 21.35 | 0.80 | 0.89 |
| S7 | 69.35 | 3.72 | 1.01 | 2.67 | 0.25 | 0.10 | 21.81 | 0.80 | 0.29 |
| S8 | 69.20 | 4.05 | 1.05 | 2.85 | 0.15 | 0.10 | 21.53 | 0.77 | 0.30 |
| S9 | 69.50 | 4.11 | 1.02 | 2.64 | 0.00 | 0.08 | 21.55 | 0.79 | 0.31 |
| S10 | 69.05 | 4.08 | 0.89 | 2.65 | 0.29 | 0.08 | 21.89 | 0.79 | 0.28 |
| S11 | 68.86 | 4.08 | 1.01 | 2.82 | 0.03 | 0.08 | 22.22 | 0.87 | 0.03 |
| S12 | 69.19 | 4.09 | 1.01 | 2.61 | 0.29 | 0.11 | 21.45 | 0.96 | 0.29 |
| S13 | 68.80 | 4.05 | 1.00 | 2.60 | 0.32 | 0.10 | 21.34 | 1.50 | 0.29 |

**Table 2**

| Composition proportion | 5 ×P₂O₅/(Li₂O +0.5 ×Al₂O₃) | Li₂O/P₂O₅ | P₂O₅ ×(CaO+ ZrO₂+Li₂O+Al₂O₃)/(Na₂O +K₂O+B₂O₃) | 10 ×(ZrO₂+P₂ O₅)/Li₂O | (SiO₂-7 ×Al₂ O₃-Li₂O)/(P₂O₅+ZrO₂) | 99 ×(CaO+Zr O₂)/(Li₂O+Na₂O+1000×K ₂O) | (5.6×B₂O₃+1 0×Al₂O₃+6.5×CaO)/ZrO₂ |
|---|---|---|---|---|---|---|---|
| S1 | 0.201 | 22.663 | 0.219 | 1.677 | 4.745 | 3.394 | 18.829 |
| S2 | 0.228 | 19.882 | 0.426 | 1.820 | 5.659 | 4.921 | 18.271 |
| S3 | 0.199 | 23.100 | 0.598 | 1.550 | 4.665 | 3.208 | 17.864 |
| S4 | 0.243 | 18.783 | 0.576 | 1.690 | 5.082 | 2.937 | 19.158 |
| S5 | 0.214 | 21.350 | 0.264 | 1.686 | 5.325 | 2.758 | 18.360 |
| S6 | 0.220 | 20.728 | 0.236 | 1.724 | 5.207 | 3.060 | 19.126 |
| S7 | 0.213 | 21.594 | 0.458 | 1.687 | 5.842 | 2.814 | 16.488 |
| S8 | 0.223 | 20.505 | 0.557 | 1.811 | 4.954 | 2.945 | 16.556 |
| S9 | 0.216 | 21.127 | 0.761 | 1.698 | 5.240 | 3.344 | 18.171 |
| S10 | 0.186 | 24.596 | 0.403 | 1.617 | 5.254 | 3.333 | 17.926 |
| S11 | 0.208 | 22.000 | 2.164 | 1.724 | 4.721 | 3.573 | 16.533 |
| S12 | 0.215 | 21.238 | 0.426 | 1.688 | 5.279 | 2.683 | 18.684 |
| S13 | 0.214 | 21.340 | 0.415 | 1.687 | 5.308 | 3.336 | 19.952 |

**Table 3**

| Example | Appearance of base glass brick | Tg/ °C | T₁/ °C | T₂/ °C | T₂-T₁/ °C | Tₘₐₓ (Li₂SiO₃), °C | Tₘₐₓ (SiO₂), °C |
|---|---|---|---|---|---|---|---|
| S1 | Overall clear and transparent | 543.2 | 698 | 752.4 | 54.4 | 690 | / |
| S2 | Overall clear and transparent | 536 | 724.5 | 777 | 52.5 | 725 | / |
| S3 | Overall clear and transparent | 523.5 | 678 | 744.8 | 66.8 | 670 | / |
| S4 | Overall clear and transparent | 542.8 | 707.8 | 748 | 40.2 | 700 | 690 |
| S5 | Overall clear and transparent | 545 | 693.5 | 754 | 60.5 | 680 | / |
| S6 | Overall clear and transparent | 545 | 695 | 740 | 45 | 685 | 670 |
| S7 | Overall clear and transparent | 541 | 690 | 753 | 63 | 680 | / |
| S8 | Overall clear and transparent | 546 | 705 | 756 | 51 | 695 | / |
| S9 | Overall clear and transparent | 526.2 | 721 | 768.5 | 47.5 | 710 | / |
| S10 | Overall clear and transparent | 543 | 691.5 | 748 | 56.5 | 690 | / |
| S11 | Overall clear and transparent | 538 | 703 | 745 | 42 | 700 | 685 |
| S12 | Overall clear and transparent | 538 | 695 | 745 | 50 | 695 | / |
| S13 | Overall clear and transparent | 539 | 702 | 751 | 49 | 695 | / |

Note: In Table 3, "/" indicates that the SiO₂ crystalline phase does not appear, therefore no quartz disappearance temperature exists; the interpretation in the corresponding tables for the comparative examples follows the same principle.

**Table 4**

| Exa mpl e | Heat treatment process C, nucleatio n temperat ure / holding time | Heat treatmen t process C, crystalliz ation temperat ure / holding time | Appearan ce of preforme d glass -ceramic brick | Crystallin e phase compositi on in preformed glass-cera mics | Degree of crystall ization of prefor med glass-c eramic s | Preformed glass-ceramic s, 0.6 mm thick glass-ceramic s sheet | | 3D curved glass-ceramics | | | | |
|---|---|---|---|---|---|---|---|---|---|---|---|---|
| | | | | | | Averag e of b-valu es at nine locatio ns | Differ ence betwe en the maxi mum b-valu e and the minim um b-valu e at nine locati ons | Petalit e crysta lline phase conte nt,% | Lithiu m disilic ate crysta lline phase conte nt,% | Crystalline phase compositio n | Average of b-values at nine locations ; 0.6 mm thick 3D curved glass-cer amics | Differen ce between the maximu m b-value and the minimu m b-value at nine locations ; 0.6 mm thick 3D curved glass-cer amics |
| | 555 °C / 240 min | 660 °C / 90 min | Overall clear and transpare nt | Li₂SiO₃ | 70.17 % | | | | | | | |
| | | | | Li₃PO₄ | | | | | | Li₃PO₄ | | |
| S1 | | | | Li₂Si₂O₅ | | 0.61 | 0.02 | 39.7 | 40.8 | Li₂Si₂O₅ | 0.46 | 0.01 |
| | | | | LiAlSi₄O₁₀ | | | | | | LiAlSi₄O₁₀ | | |
| | 577 °C / 200 min | 690 °C / 90 min | Overall clear and transpare nt | Li₂SiO₃ | 73.95 % | | | | | | | |
| | | | | Li₃PO₄ | | | | | | Li₃PO₄ | | |
| S2 | | | | Li₂Si₂O₅ | | 0.64 | 0.02 | 40.6 | 39.4 | Li₂Si₂O5 | 0.54 | 0.02 |
| | | | | LiAlSi₄O₁₀ | | | | | | LiAlSi₄O₁₀ | | |
| | 520 °C / 180 min | 640 °C / 180 min | Overall clear and transpare nt | Li₂SiO₃ | 76.50 % | | | | | | | |
| | | | | Li₃PO₄ | | | | | | Li₃PO₄ | | |
| S3 | | | | Li₂Si₂O₅ | | 0.53 | 0.01 | 43.2 | 39.5 | Li₂Si₂O₅ | 0.41 | 0.01 |
| | | | | LiAlSi₄O₁₀ | | | | | | LiAlSi₄O₁₀ | | |
| S4 | 590 °C / 120 min | 675 °C / 90 min | Overall clear and transpare nt | Li₂SiO₃ | 78.60 % | 0.67 | 0.02 | 43.5 | 39.1 | Li₃PO₄ | 0.57 | 0.02 |
| | | | | Li₃PO₄ | | | | | | Li₂Si₂O₅ | | |
| | | | | Li₂Si₂O₅ | | | | | | LiAlSi₄O₁₀ | | |
| | | | | LiAlSi₄O₁₀ | | | | | | | | |
| | 545 °C / 240 min | 654 °C / 90 min | Overall clear and transpare nt | Li₂SiO₃ | 76.50 % | | | | | | | |
| | | | | Li₃PO₄ | | | | | | Li₃PO₄ | | |
| S5 | | | | Li₂Si₂O₅ | | 0.67 | 0.02 | 41.7 | 38.5 | Li₂Si₂O₅ | 0.58 | 0.02 |
| | | | | LiAlSi₄O_{1 0} | | | | | | LiAlSi₄O₁₀ | | |
| | 545 °C / 240 min | 650 °C / 90 min | Overall clear and transpare nt | Li₂SiO₃ | 84.40 % | | | | | | | |
| | | | | Li₃PO₄ | | | | | | Li₃PO₄ | | |
| S6 | | | | Li₂Si₂O₅ | | 0.65 | 0.01 | 40.8 | 43.1 | Li₂Si₂O₅ | 0.53 | 0.01 |
| | | | | LiAlSi₄O₁₀ | | | | | | LiAlSi₄O₁₀ | | |
| | 545 °C / 240 min | 648 °C / 90 min | Overall clear and transpare nt | Li₂SiO₃ | 74.20 % | | | | | | | |
| | | | | Li₃PO₄ | | | | | | Li₃PO₄ | | |
| S7 | | | | Li₂Si₂O₅ | | 0.53 | 0.02 | 40.8 | 41.6 | Li₂Si₂O₅ | 0.48 | 0.02 |
| | | | | LiAlSi₄O₁₀ | | | | | | LiAlSi₄O₁₀ | | |
| | 550 °C / 200 min | 655 °C / 90 min | Overall clear and transpare nt | Li₂SiO₃ | 80.70 % | | | | | | | |
| | | | | Li₃PO₄ | | | | | | Li3PO4 | | |
| S8 | | | | Li₂Si₂O₅ | | 0.6 | 0.02 | 40 | 40.8 | Li₂Si₂O₅ | 0.49 | 0.02 |
| | | | | LiAlSi₄O₁₀ | | | | | | LiAlSi₄O₁₀ | | |
| | 575 °C / 300 min | 673 °C / 90 min | Overall clear and transpare nt | Li₂SiO₃ | 79.40 % | | | | | | | |
| | | | | Li₃PO₄ | | | | | | Li₃PO₄ | | |
| S9 | | | | Li₂Si₂O₅ | | 0.64 | 0.05 | 42.7 | 41.6 | Li₂Si₂O₅ | 0.51 | 0.01 |
| | | | | LiAlSi₄O₁₀ | | | | | | LiAlSi₄O₁₀ | | |
| | 560 °C / 240 min | 627 °C / 30 min | Overall clear and transpare nt | Li₂SiO₃ | 68.40 % | | | | | | | |
| | | | | Li₃PO₄ | | | | | | Li₃PO₄ | | |
| S10 | | | | Li₂Si₂O₅ | | 0.67 | 0.01 | 39.9 | 40.9 | Li₂Si₂O₅ | 0.5 | 0.01 |
| | | | | LiAlSi₄O_{1 0} | | | | | | LiAlSi₄O₁₀ | | |
| | 555 °C / 240 min | 659 °C / 90 min | Overall clear and transpare nt | Li₂SiO₃ | 74.30 % | | | | | | | |
| | | | | Li₃PO₄ | | | | | | Li₃PO₄ | | |
| S11 | | | | Li₂Si₂O₅ | | 0.73 | 0.03 | 40.5 | 41.3 | Li₂Si₂O₅ | 0.56 | 0.03 |
| | | | | LiAlSi₄O₁₀ | | | | | | LiAlSi₄O₁₀ | | |
| | *550* °C/ 200 min | 657 °C / 90 min | Overall clear and transpare nt | Li₂SiO₃ | 80.70 % | | | | | | | |
| | | | | Li₃PO₄ | | | | | | Li₃PO₄ | | |
| S12 | | | | Li₂Si₂O₅ | | 0.69 | 0.05 | 36.8 | 35.6 | Li₂Si₂O₅ | 0.54 | 0.05 |
| | | | | LiAlSi₄O₁₀ | | | | | | LiAlSi₄O₁₀ | | |
| | 550° C/ 240 min | 665 °C / 90 min | Overall clear and transpare nt | Li₂SiO₃ | 82.50 % | | | | | | | |
| | | | | Li₃PO₄ | | | | | | Li₃PO₄ | | |
| S13 | | | | Li₂Si₂O₅ | | 0.55 | 0.04 | 41.6 | 41 | Li₂Si₂O₅ | 0.49 | 0.01 |
| | | | | LiAlSi₄O₁₀ | | | | | | **LiAlSi₄O₁₀** | | |

**Table 5**

| Example No. | Salt bath for strengthening | Salt bath temperatur e/chemical strengthening time | Surface Na₂O concentrat ion /wt% | CS_50/ MPa | CT_AV /MPa | DOL_0/ µm | Numbers of drops until breakage at a fixed-point height of 1.0 m |
|---|---|---|---|---|---|---|---|
| | 30wt% NaNO₃+ | | | | | | |
| S1 | 70wt% KNO₃+ | 470 °C /7h | 8.4 | 165 | 85 | 131 | 50 |
| | 0.03wt% LiNO₃ | | | | | | |
| | 30wt% NaNO₃+ | | | | | | |
| S2 | 70wt% KNO₃+ | 470 °C /7h | 9.2 | 147 | 105 | 126 | >50 |
| | 0.03wt% LiNO₃ | | | | | | |
| | 30wt% NaNO₃+ | | | | | | |
| S3 | 70wt% KNO₃+ | 470 °C /7h | 8.9 | 159 | 102 | 134 | >50 |
| | 0.03wt% LiNO₃ | | | | | | |
| | 30wt% NaNO₃+ | | | | | | |
| S4 | 70wt% KNO₃+ | 470 °C /7h | 10.8 | 168 | 115 | 130 | 58 |
| | 0.03wt% LiNO₃ | | | | | | |
| | 30wt% NaNO₃+ | | | | | | |
| S5 | 70wt% KNO₃+ | 470 °C /7h | 11.5 | 164 | 108 | 131 | >50 |
| | 0.03wt% LiNO₃ | | | | | | |
| | 30wt% NaNO₃+ | | | | | | |
| S6 | 70wt% KNO₃+ | 470 °C /7h | 12.5 | 143 | 107 | 134 | 62 |
| | 0.03wt% LiNO₃ | | | | | | |
| | 30wt% NaNO₃+ | | | | | | |
| S7 | 70wt% KNO₃+ | 470 °C /7h | 16.8 | 190 | 108 | 132 | >50 |
| | 0.03wt% LiNO₃ | | | | | | |
| | 30wt% NaNO₃+ | | | | | | |
| S8 | 70wt% KNO₃+ | 470 °C /7h | 12.4 | 175 | 114 | 135 | >50 |
| | 0.03wt% LiNO₃ | | | | | | |
| | 30wt% NaNO₃+ | | | | | | |
| S9 | 70wt% KNO₃+ | 470 °C /7h | 8.9 | 131 | 108 | 125 | >50 |
| | 0.03wt% LiNO₃ | | | | | | |
| | 30wt% NaNO₃+ | | | | | | |
| S10 | 70wt% KNO₃+ | 470 °C /7h | 13.1 | 168 | 97 | 135 | >50 |
| | 0.03wt% LiNO₃ | | | | | | |
| | 30wt% NaNO₃+ | | | | | | |
| S11 | 70wt% KNO₃+ | 470 °C /7h | 9.4 | 198 | 95 | 129 | 55 |
| | 0.03wt% LiNO₃ | | | | | | |
| | 30wt% NaNO₃+ | | | | | | |
| S12 | 70wt% KNO₃+ | 470 °C /7h | 8.5 | 113 | 86 | 141 | >50 |
| | 0.03wt% LiNO₃ | | | | | | |
| | 30wt% NaNO₃+ | | | | | | |
| S13 | 70wt% KNO₃+ | 470 °C /7h | 8 | 116 | 90 | 120 | 55 |
| | 0.03wt% LiNO₃ | | | | | | |

| | | | | | | | |
|---|---|---|---|---|---|---|---|
| Note: In Table 5, ">50" indicates that the sample did not break after 50 drops; the interpretation is the same for other similar notations. The interpretation in the corresponding tables for the comparative examples follows the same principle. | | | | | | | |

**Table 6**

| Composition (mol%) | SiO₂ | Al₂O₃ | P₂O₅ | ZrO₂ | Na₂O | K₂O | Li₂O | CaO | B₂O₃ |
|---|---|---|---|---|---|---|---|---|---|
| D1 | 71.46 | 4.24 | 1.05 | 2.72 | 0.30 | 0.08 | 19.03 | 0.82 | 0.30 |
| D2 | 66.73 | 3.80 | 0.92 | 2.50 | 0.20 | 0.08 | 25.00 | 0.77 | 0.00 |
| D3 | 69.43 | 4.13 | 0.80 | 2.64 | 0.29 | 0.08 | 21.53 | 0.80 | 0.30 |
| D4 | 68.94 | 4.09 | 1.80 | 2.62 | 0.29 | 0.08 | 21.09 | 0.79 | 0.30 |
| D5 | 68.43 | 4.06 | 1.00 | 2.60 | 0.29 | 0.08 | 21.22 | 0.78 | 1.54 |
| D6 | 68.66 | 4.07 | 1.01 | 3.60 | 0.20 | 0.08 | 21.29 | 0.79 | 0.30 |
| D7 | 69.77 | 4.22 | 1.24 | 2.71 | 0.32 | 0.08 | 20.47 | 0.83 | 0.36 |
| D8 | 68.65 | 4.07 | 1.01 | 2.61 | 0.29 | 0.99 | 21.29 | 0.79 | 0.30 |
| D9 | 68.90 | 4.15 | 1.00 | 2.60 | 0.25 | 0.10 | 21.00 | 1.80 | 0.20 |
| D10 | 68.76 | 4.06 | 2.00 | 2.58 | 0.29 | 0.08 | 21.19 | 0.78 | 0.26 |
| D11 | 70.10 | 4.27 | 0.83 | 1.75 | 1.48 | 0.00 | 21.42 | 0.00 | 0.15 |
| D12 | 71.00 | 4.00 | 1.00 | 2.00 | 0.00 | 0.00 | 22.00 | 0.00 | 0.00 |
| D13 | 69.11 | 5.00 | 1.00 | 2.45 | 0.29 | 0.08 | 21.17 | 0.60 | 0.30 |

**Table 7**

| Comparative Example No. | 5 ×P₂O₅/(Li₂ O+0.5 ×Al₂O₃ ) | Li₂O/P₂O₅ | P₂O₅ ×(CaO+Zr O₂+Li₂O+Al₂O₃ )/(Na₂O+K₂O+ B₂O₃) | 10 ×(ZrO₂+P₂ O₅)/Li₂O | (SiO₂-7 ×Al₂ O₃-Li₂O)/(P₂ O₅+ZrO₂) | 99 ×(CaO+Zr O₂)/(Li₂O+N a₂O+1000×K ₂O) | (5.6×B₂O₃+1 0×Al₂O₃+6.5 ×CaO)/ZrO₂ |
|---|---|---|---|---|---|---|---|
| D1 | 0.248 | 18.124 | 0.414 | 1.981 | 6.034 | 3.528 | 18.165 |
| D2 | 0.171 | 27.174 | 1.054 | 1.368 | 4.424 | 3.077 | 17.202 |
| D3 | 0.170 | 26.913 | 0.347 | 1.598 | 5.520 | 3.345 | 18.250 |
| D4 | 0.389 | 11.717 | 0.768 | 2.096 | 4.348 | 3.330 | 18.212 |
| D5 | 0.215 | 21.220 | 0.150 | 1.697 | 5.219 | 3.296 | 20.882 |
| D6 | 0.217 | 21.079 | 0.518 | 2.165 | 4.095 | 4.282 | 13.199 |
| D7 | 0.275 | 16.508 | 0.461 | 1.930 | 5.003 | 3.477 | 18.307 |
| D8 | 0.217 | 21.079 | 0.184 | 1.700 | 5.213 | 0.333 | 18.205 |
| D9 | 0.217 | 21.000 | 0.537 | 1.714 | 5.236 | 3.593 | 20.892 |
| D10 | 0.431 | 10.595 | 0.908 | 2.161 | 4.181 | 3.278 | 18.266 |
| D11 | 0.176 | 25.807 | 0.140 | 1.204 | 7.283 | 7.566 | 24.880 |
| D12 | 0.208 | 22.000 | 0.000 | 1.364 | 7.000 | 9.000 | 20.000 |
| D13 | 0.211 | 21.170 | 0.436 | 1.630 | 3.751 | 2.976 | 22.686 |

**Table 8**

| Comparative Example No. | Tg/ °C | T₁/ °C | T₂/ °C | T₂-T₁/ °C | Tₘₐₓ (Li₂SiO₃), °C | Tₘₐₓ (SiO₂), °C |
|---|---|---|---|---|---|---|
| D1 | 549 | 750.6 | No corresponding peak | Absent | 710 | Continuously present, no disappearance temperature point. |
| D2 | 543 | 747.0 | 778.4 | 31.4 | 715 | Continuously present, no disappearance temperature point. |
| D3 | 541 | 744.7 | No corresponding peak | Absent | 705 | Continuously present, no disappearance temperature point. |
| D4 | 545 | 731.0 | 778.8 | 47.8 | 710 | Continuously present, no disappearance temperature point. |
| D5 | 529 | 700.0 | 728.0 | 28 | 690 | Continuously present, no disappearance temperature point. |
| D6 | 530 | 742.0 | 781.5 | 39.5 | 745 | Continuously present, no disappearance temperature point. |
| D7 | 546 | 718.5 | 751.0 | 32.5 | 715 | Continuously present, no disappearance temperature point. |
| D8 | 540 | 709.0 | 742.5 | 33.5 | 710 | Continuously present, no disappearance temperature point. |
| D11 | 490 | 660.0 | 742.0 | 82 | 660 | / |
| D12 | 530 | 699.0 | 742.0 | 43 | 675 | 660 |

**Table 9**

| Comparative Example | Appearance of base glass brick | Heat treatment process C, nucleation temperature /holding time | Heat treatment process C, crystallization temperature /holding time | Appearance of preformed glass-ceramics brick | Crystalline phase composition in preformed glass-ceramics | Degree of crystallization of preformed glass-ceramics |
|---|---|---|---|---|---|---|
| | Overall bluish and transparent | | | Uneven crystallization and partial cracking. | SiO₂ | |
| | | | | | Li₂SiO₃ | |
| D1 | | 575 °C /220min | 680 °C /90min | | Li₃PO₄ | 67.9% |
| | | | | | Li₂Si₂O₅ | |
| | | | | | LiAlSi₄O₁₀ | |
| | Overall clear and transparent | | | Overall bluish, hazy | SiO₂ | |
| | | | | | Li₂SiO₃ | |
| D2 | | 560 °C /240min | 685 °C /90min | | Li₃PO₄ | 78.8% |
| | | | | | Li₂Si₂O₅ | |
| | | | | | LiAlSi₄O₁₀ | |
| | Overall bluish and transparent | | | Uneven crystallization and partial cracking | SiO₂ | |
| | | | | | Li₂SiO₃ | |
| D3 | | 550 °C /240min | 688 °C /90min | | Li₃PO₄ | 74.5% |
| | | | | | Li₂Si₂O₅ | |
| | | | | | LiAlSi₄O₁₀ | |
| D4 | Overall bluish and transparent | 560 °C /240min | 690 °C /90min | Uneven crystallization and partial cracking | SiO₂ | 84.9% |
| | | | | | Li₂SiO₃ | |
| | | | | | Li₃PO₄ | |
| | | | | | Li₂Si₂O₅ | |
| | | | | | LiAlSi₄O₁₀ | |
| D5 | Overall clear and transparent | 545 °C /240min | 664 °C /90min | Overall bluish, hazy | SiO₂ | 89.6% |
| | | | | | Li₂SiO₃ | |
| | | | | | Li₂Si₂O₅ | |
| | | | | | LiAlSi₄O₁₀ | |
| | Slightly blurred, milky white | | | Uneven crystallization and partial cracking | SiO₂ | |
| | | | | | Li₂SiO₃ | |
| D6 | | 550 °C /240min | 680 °C /90min | | Li₃PO₄ | 84.3% |
| | | | | | Li₂Si₂O₅ | |
| | | | | | LiAlSi₄O₁₀ | |
| | Overall bluish and transparent | | | Uneven crystallization and partial cracking | SiO₂ | |
| | | | | | Li₂SiO₃ | |
| D7 | | 575 °C /240min | 679 °C /90min | | Li₃PO₄ | 69.9% |
| | | | | | Li₂Si₂O₅ | |
| | | | | | LiAlSi₄O₁₀ | |
| | Overall bluish and transparent | | | Uneven crystallization and partial cracking | SiO₂ | |
| | | | | | Li₂SiO₃ | |
| D8 | | 580 °C /120min | 685 °C /90min | | Li₃PO₄ | 64.5% |
| | | | | | Li₂Si₂O₅ | |
| | | | | | LiAlSi₄O₁₀ | |
| D9 | Translucent milky white | / | / | / | / | / |
| D10 | Translucent milky white | / | / | / | / | / |
| D11 | Overall clear and transparent | 500 °C /240min | 660 °C /90min | Overall clear and transparent | Li₂SiO₃ | 80.3% |
| | | | | | Li₃PO₄ | |
| | | | | | Li₂Si₂O₅ | |
| | | | | | LiAlSi₄O₁₀ | |
| D12 | Overall clear and transparent | 545 °C /240min | 675 °C /90min | Overall clear and transparent | Li₂SiO₃ | 84.6% |
| | | | | | Li₃PO₄ | |
| | | | | | Li₂Si₂O₅ | |
| | | | | | LiAlSi₄O₁₀ | |
| D13 | The glass is milky white with unmelted materials. | / | / | / | / | / |

**Table 10**

| Comparati ve Example | 30 mm thick preformed glass-ceram ics brick, difference between the maximum b-value and the minimum b-value at nine locations | Average of b-values at nine locations; 0.6 mm thick preformed glass-ceram ics | Difference between the maximum b-value and the minimum b-value at nine locations; 0.6 mm thick preformed glass-ceram ics | Crystalline phase compositio n in 3D curved glass-ceram ics | Petalite crystalline phase content in 3D curved glass-cerami cs, wt%. | Lithium disilicate crystalline phase content in 3D curved glass-cerami cs, wt% | Average of b-values at nine locations; 0.6 mm thick 3D curved glass-ceram ics | Difference between the maximum b-value and the minimum b-value at nine locations; 0.6 mm thick 3D curved glass-ceram ics |
|---|---|---|---|---|---|---|---|---|
| D1 | 1.54 | 1.23 | 1.54 | SiO₂ | 36.8 | 35.6 | 0.98 | 1.02 |
| | | | | Li₃PO₄ | | | | |
| | | | | Li₂Si₂O₅ | | | | |
| | | | | LiAlSi₄O₁₀ | | | | |
| D2 | 0.55 | 2.10 | 0.55 | SiO₂ | 39.1 | 37.4 | 2.06 | 0.50 |
| | | | | Li₃PO₄ | | | | |
| | | | | Li₂Si₂O₅ | | | | |
| | | | | LiAlSi₄O₁₀ | | | | |
| D3 | 0.91 | 1.02 | 0.91 | SiO₂ | 39.2 | 39.7 | 0.91 | 0.73 |
| | | | | Li₃PO₄ | | | | |
| | | | | LiAlSi₂O₆ | | | | |
| | | | | Li₂Si₂O₅ | | | | |
| | | | | LiAlSi₄O₁₀ | | | | |
| D4 | 0.72 | 0.97 | 0.72 | SiO₂ | 33.5 | 39.5 | 0.89 | 0.72 |
| | | | | Li₃PO₄ | | | | |
| | | | | Li₂Si₂O₅ | | | | |
| | | | | LiAlSi₄O₁₀ | | | | |
| D5 | 0.53 | 1.40 | 0.53 | SiO₂ | 31.7 | 38.9 | 1.32 | 0.51 |
| | | | | Li₃PO₄ | | | | |
| | | | | Li₂Si₂O₅ | | | | |
| | | | | LiAlSi₄O₁₀ | | | | |
| D6 | 1.03 | 1.86 | 1.03 | SiO₂ | 40.1 | 39.7 | 1.66 | 0.97 |
| | | | | Li₃PO₄ | | | | |
| | | | | Li₂Si₂O₅ | | | | |
| | | | | LiAlSi₄O₁₀ | | | | |
| D7 | 1.06 | 0.90 | 1.06 | SiO₂ | 39.8 | 40.6 | 0.81 | 0.95 |
| | | | | Li₃PO₄ | | | | |
| | | | | Li₂Si₂O₅ | | | | |
| | | | | LiAlSi₄O₁₀ | | | | |
| D8 | 0.84 | 0.98 | 0.84 | SiO₂ | 39.0 | 40.8 | 0.98 | 0.80 |
| | | | | Li₃PO₄ | | | | |
| | | | | Li₂Si₂O₅ | | | | |
| | | | | LiAlSi₄O₁₀ | | | | |
| D11 | / | 0.75 | 0.03 | Li₂Si₂O₅ | 39.7 | 41.0 | 0.65 | 0.05 |
| | | | | Li₃PO₄ | | | | |
| | | | | LiAlSi₄O₁₀ | | | | |
| D12 | / | 0.88 | 0.15 | Li₂Si₂O₅ | 39.9 | 38.5 | 0.76 | 0.11 |
| | | | | Li₃PO₄ | | | | |
| | | | | LiAlSi₄O₁₀ | | | | |

**Table 11**

| Comparative Example No. | Salt bath for strengthening | Salt bath temperature/c hemical strengthening time | CS_50/ MPa | \|CT_AV\| /MPa | DOL_0/ µm | Numbers of drops until breakage at a fixed-point height of 1.0 m |
|---|---|---|---|---|---|---|
| | 30wt% NaNO₃+7 | | | | | |
| D1 | 0wt%KNO₃+0.0 | 470 °C /7h | 98 | 77 | 130 | <2 |
| | 3wt%LiNO₃ | | | | | |
| | 30wt% NaNO₃+7 | | | | | |
| D2 | 0wt%KNO₃+0.0 | 470 °C /7h | 123 | 85 | 135 | <5 |
| | 3wt%LiNO₃ | | | | | |
| | 30wt% NaNO₃+7 | | | | | |
| D3 | 0wt%KNO₃+0.0 | 470 °C /7h | 94 | 80 | 132 | <5 |
| | 3wt%LiNO₃ | | | | | |
| D4 | 30wt% NaNO₃+7 | 470 °C /7h | 90 | 81 | 129 | <5 |
| | 0wt%KNO₃+0.0 | | | | | |
| | 3wt%LiNO₃ | | | | | |
| | 30wt%NaNO₃+7 | | | | | |
| D5 | 0wt%KNO₃+0.0 | 470 °C /7h | 100 | 92 | 135 | <5 |
| | 3wt%LiNO₃ | | | | | |
| | 30wt%NaNO₃+7 | | | | | |
| D6 | 0wt%KNO₃+0.0 | 470 °C /7h | 101 | 80 | 132 | <5 |
| | 3wt%LiNO₃ | | | | | |
| | 30wt%NaNO₃+7 | | | | | |
| D7 | 0wt%KNO₃+0.0 | 470 °C /7h | 102 | 86 | 135 | <5 |
| | 3wt%LiNO₃ | | | | | |
| | 30wt%NaNO₃+7 | | | | | |
| D8 | 0wt%KNO₃+0.0 | 470 °C /7h | 97 | 67 | 121 | <5 |
| | 3wt%LiNO₃ | | | | | |
| | 30wt%NaNO₃+7 | | | | | |
| D11 | 0wt%KNO₃+0.0 | 470 °C /7h | 119 | 42 | 135 | 1 |
| | 3wt%LiNO₃ | | | | | |
| | 30wt%NaNO₃+7 | | | | | |
| D12 | 0wt%KNO₃+0.0 | 470 °C /7h | 120 | 50 | 140 | 1 |
| | 3wt%LiNO₃ | | | | | |

From the results of the examples in Tables 1 to 5 and the comparative examples in Tables 6 to 11 above, it can be seen that compared to the comparative examples, the embodiments of the present disclosure, while satisfying the content ranges of each oxide and the satisfying compositional characteristics: 0.180 ≤ 5 × P₂O₅ / (Li₂O + 0.5 × Al₂O₃) ≤ 0.250, 18.200 ≤ Li₂O / P₂O₅ ≤ 25.500, 0.100 ≤ P₂O₅ × (CaO + ZrO₂ + Li₂O + Al₂O₃) / (Na₂O + K₂O + B₂O₃) ≤ 2.200, 1.500 ≤ 10 × (ZrO₂ + P₂O₅) / Li₂O ≤ 2.000, 4.000 ≤ (SiO₂ - 7 × Al₂O₃ - Li₂O) / (P₂O₅ + ZrO₂) ≤ 6.000, 2.600 ≤ 99 × (CaO + ZrO₂) / (Li₂O + Na₂O + 1000 × K₂O) ≤ 5.000, and 12.200 ≤ (5.6 × B₂O₃ + 10 × Al₂O₃ + 6.5 × CaO) / ZrO₂ ≤ 20.000, the prepared large-sized base glass bricks are clear and transparent in appearance, and Tₘₐₓ (Li₂SiO₃) ≥ Tₘₐₓ (SiO₂) facilitates the 3D curved glass-ceramic obtained by 3D hot-bending to have good and uniform optical performance. The heating DSC curve of the base glass from simultaneous thermal analysis shows at least two exothermic peaks at suitable temperatures.

The preformed glass-ceramic bricks obtained by heat-treating the large-sized base glass bricks prepared according to the examples of the present disclosure are also transparent and clear in appearance. The b-values in different areas of the main surface of these preformed glass-ceramic bricks show small differences, indicating good uniformity, and these preformed glass-ceramics do not comprise a quartz crystalline phase. In the 3D curved glass-ceramics prepared by hot-bending treatment using these preformed glass-ceramics, the difference between the maximum b-value and the minimum b-value measured at nine locations on the main surface is low, and the average of b-values at nine locations is also low. This indicates that the 3D curved glass-ceramic has excellent optical performance and good display performance. Meanwhile, by chemically strengthening the prepared 3D curved glass-ceramic, a chemically strengthened glass-ceramic can be obtained that simultaneously achieves all of a high CS_50, a high |CT_AV|, and a high DOL_0.

In Comparative Examples 1 to 8 and Comparative Example 12, formulations of the base glass do not simultaneously satisfy: the content ranges of each oxide according to the present disclosure, and 0.180 ≤ 5 × P₂O₅ / (Li₂O + 0.5 × Al₂O₃) ≤ 0.250, 18.200 ≤ Li₂O / P₂O₅ ≤ 25.500, 0.100 ≤ P₂O₅ × (CaO + ZrO₂ + Li₂O + Al₂O₃) / (Na₂O + K₂O + B₂O₃) ≤ 2.200, 1.500 ≤ 10 × (ZrO₂ + P₂O₅) / Li₂O ≤ 2.000, 4.000 ≤ (SiO₂ - 7 × Al₂O₃ - Li₂O) / (P₂O₅ + ZrO₂) ≤ 6.000, 2.600 ≤ 99 × (CaO + ZrO₂) / (Li₂O + Na₂O + 1000 × K₂O) ≤ 5.000, and 12.200 ≤ (5.6 × B₂O₃ + 10 × Al₂O₃ + 6.5 × CaO) / ZrO₂ ≤ 20.000. When large-sized preformed glass-ceramic bricks are prepared by heat-treating the large-sized base glass bricks made using these formulations, the b-values in different areas of the main surface of the prepared preformed glass-ceramic bricks show significant differences. This significant difference carries over to the 3D curved glass-ceramics obtained by hot-bending, resulting in poor optical performance, causing the display effect of the 3D curved glass-ceramics to fail to meet usage requirements, and even leading to cracking phenomena.

In Comparative Examples 9 and 10, after preparing large-sized base glass bricks, milky white precipitates directly appear in the base glass bricks, optical performance deteriorates, and transmittance decreases. In Comparative Examples 11 and 12, the glass-ceramics produced on a mass scale cannot achieve the required excellent mechanical properties after chemical strengthening treatment, and the drop resistance effect is significantly worse than that of the products of the present disclosure. In Comparative Example 13, milky white precipitates and unmelted material appear in the prepared large-sized base glass bricks.

The preferred embodiments of the present disclosure have been described in detail above. However, the present disclosure is not limited thereto. Within the technical concept scope of the present disclosure, various simple modifications can be made to the technical solutions of the present disclosure, including combining various technical features in any other suitable manner. These simple modifications and combinations should also be regarded as the content disclosed by the present disclosure and fall within the protection scope of the present disclosure.

### Industrial Applicability

By keeping the content of each oxide within a suitable range in combination with specific ratios of oxide contents under given conditions, the present disclosure can ensure the generation of main crystalline phases during the mass production of 3D curved glass-ceramic products. At the same time, it ensures that the prepared 3D curved glass-ceramic products exhibit a relatively uniform overall display effect, effectively avoiding the problem of significant differences in b-values between different areas and poor display performance in mass-produced 3D curved glass-ceramic products.

The large-sized base glass bricks prepared using the glass of the present disclosure, when heat-treated to prepare preformed glass-ceramic bricks, can ensure that the b-values across the main surface of the preformed glass-ceramic brick are close, thereby guaranteeing that the 3D curved glass-ceramic made from it also exhibits a good display effect. Using the specific composition of the present disclosure can ensure obtaining a 3D curved glass-ceramic with good optical performance, which is beneficial for achieving industrial mass production of 3D curved glass-ceramics and improving the yield of 3D curved glass-ceramic products. Meanwhile, the glass-ceramic prepared using the above base glass formulation solution can be chemically strengthened to obtain a chemically strengthened glass-ceramic with excellent strength performance, especially drop resistance performance.

In the mass production process of 3D curved glass-ceramics with petalite and lithium disilicate as the main crystalline phases, products with poor optical display performance basically all comprise cristobalite (SiO₂) impurity phases. By adjusting the composition of the base glass, the present disclosure makes the upper precipitation limit temperature Tₘₐₓ (SiO₂) of the quartz crystalline phase lower than the upper precipitation limit temperature Tₘₐₓ (Li₂SiO₃) of the lithium metasilicate crystalline phase within a specific temperature range in the base glass. This can ensure that under specific heat treatment process conditions, which are used to prepare preformed glass-ceramics with petalite and lithium disilicate as the main crystalline phases, the precipitation of the quartz crystalline phase is effectively avoided. Combined with the subsequent hot-bending process, the lithium metasilicate crystalline phase can also be transformed into the desired lithium disilicate crystalline phase, thereby avoiding the adverse effects of the quartz crystalline phase and lithium metasilicate crystalline phase on the optical effect of the glass.

## Claims

1. A 3D curved glass-ceramic, comprising a petalite crystalline phase and a lithium disilicate crystalline phase, wherein the petalite crystalline phase and the lithium disilicate crystalline phase have a higher weight percentage than other crystalline phases present in the 3D curved glass-ceramic;
based on a mole percentage of oxides, a composition of the 3D curved glass-ceramic comprises:
SiO₂: 60.00 mol% to 71.00 mol%, Al₂O₃: 1.50 mol% to 5.00 mol%, P₂O₅: 0.80 mol% to 1.50 mol%, ZrO₂: 2.00 mol% to 4.00 mol%, Na₂O: 0.00 mol% to 1.00 mol%, K₂O: 0.00 mol% to 0.50 mol%, Li₂O: 20.00 mol% to 30.00 mol%, CaO: 0.00 mol% to 1.60 mol%, and B₂O₃: 0.00 mol% to 1.00 mol%;
based on a content expressed as the mole percentage of each oxide in the composition of the 3D curved glass-ceramic, the composition of the 3D curved glass-ceramic satisfies: $0.180 \leq 5 \times {P}_{2} {O}_{5} / \left({Li}_{2}O+0.5\times {Al}_{2}{O}_{3}\right) \leq 0.250 ;$ $18.200 \leq {Li}_{2} O / {P}_{2} {O}_{5} \leq 25.500 ;$ $0.100 \leq {P}_{2} {O}_{5} \times \left(CaO+{ZrO}_{2}+{Li}_{2}O+{Al}_{2}{O}_{3}\right) / \left({Na}_{2}O+{K}_{2}O+{B}_{2}{O}_{3}\right) \leq 2.200 ;$ $1.500 \leq 10 \times \left({ZrO}_{2}+{P}_{2}{O}_{5}\right) / {Li}_{2} O \leq 2.000 ;$ $4.000 \leq \left({SiO}_{2}-7\times {Al}_{2}{O}_{3}-{Li}_{2}O\right) / \left({P}_{2}{O}_{5}+{ZrO}_{2}\right) \leq 6.000 ;$ $2.600 \leq 99 \times \left(CaO+{ZrO}_{2}\right) / \left({Li}_{2}O+{Na}_{2}O+1000\times {K}_{2}O\right) \leq 5.000 ;$ and $12.200 \leq \left(5.6\times {B}_{2}{O}_{3}+10\times {Al}_{2}{O}_{3}+6.5\times CaO\right) / {ZrO}_{2} \leq 20.000 .$

2. The 3D curved glass-ceramic according to claim 1, wherein the 3D curved glass-ceramic is transparent within a visible light range.

3. The 3D curved glass-ceramic according to any one of claims 1 to 2, wherein, based on the mole percentage of oxides, the composition of the 3D curved glass-ceramic comprises:
SiO₂: 67.50 mol% to 71.00 mol%, Al₂O₃: 3.50 mol% to 5.00 mol%, P₂O₅: not less than 0.85 mol% and less than 1.50 mol%, ZrO₂: 2.50 mol% to 3.50 mol%, Na₂O: greater than 0.00 mol% and not greater than 1.00 mol%, K₂O: greater than 0.00 mol% and not greater than 0.50 mol%, Li₂O: 20.00 mol% to 25.00 mol%, CaO: greater than 0.50 mol% and not greater than 1.50 mol%, B₂O₃: 0.00 mol% to 1.00 mol%.

4. The 3D curved glass-ceramic according to any one of claims 1 to 3, wherein the 3D curved glass-ceramic does not comprise a quartz crystalline phase.

5. The 3D curved glass-ceramic according to any one of claims 1 to 4, wherein, a total content of the petalite crystalline phase and the lithium disilicate crystalline phase in the 3D curved glass-ceramic accounts for equal to or greater than 60.00 wt% of the 3D curved glass-ceramic, preferably equal to or greater than 70.00 wt%, and more preferably equal to or greater than 80.00 wt%; an average crystal size in the 3D curved glass-ceramic is not greater than 100 nm.

6. The 3D curved glass-ceramic according to any one of claims 1 to 5, wherein, based on the content expressed as the mole percentage of each oxide in the composition of the 3D curved glass-ceramic, the composition of the 3D curved glass-ceramic satisfies: $0.184 \leq 5 \times {P}_{2} {O}_{5} / \left({Li}_{2}O+0.5\times {Al}_{2}{O}_{3}\right) \leq 0.245 ;$
and/or $18.200 \leq {Li}_{2} O / {P}_{2} {O}_{5} \leq 25.500 ;$ and/or $0.190 \leq {P}_{2} {O}_{5} \times \left(CaO+{ZrO}_{2}+{Li}_{2}O+{Al}_{2}{O}_{3}\right) / \left({Na}_{2}O+{K}_{2}O+{B}_{2}{O}_{3}\right) \leq 2.180 ;$
and/or $1.500 \leq 10 \times \left({ZrO}_{2}+{P}_{2}{O}_{5}\right) / {Li}_{2} O \leq 1.900 ;$ and/or $4.200 \leq \left({SiO}_{2}-7\times {Al}_{2}{O}_{3}-{Li}_{2}O\right) / \left({P}_{2}{O}_{5}+{ZrO}_{2}\right) \leq 5.900 ;$
and/or $2.600 \leq 99 \times \left(CaO+{ZrO}_{2}\right) / \left({Li}_{2}O+{Na}_{2}O+1000\times {K}_{2}O\right) \leq 4.950 ;$
and/or $15.000 \leq \left(5.6\times {B}_{2}{O}_{3}+10\times {Al}_{2}{O}_{3}+6.5\times CaO\right) / {ZrO}_{2} \leq 20.000 .$

7. The 3D curved glass-ceramic according to any one of claims 1 to 6, wherein, based on the content expressed as the mole percentage of each oxide in the composition of the 3D curved glass-ceramic, the composition of the 3D curved glass-ceramic satisfies: $0.186 \leq 5 \times {P}_{2} {O}_{5} / \left({Li}_{2}O+0.5\times {Al}_{2}{O}_{3}\right) \leq 0.243 ;$
and/or $18.500 \leq {Li}_{2} O / {P}_{2} {O}_{5} \leq 24.700 ;$ and/or $0.190 \leq {P}_{2} {O}_{5} \times \left(CaO+{ZrO}_{2}+{Li}_{2}O+{Al}_{2}{O}_{3}\right) / \left({Na}_{2}O+{K}_{2}O+{B}_{2}{O}_{3}\right) \leq 2.170 ;$
and/or $1.550 \leq 10 \times \left({ZrO}_{2}+{P}_{2}{O}_{5}\right) / {Li}_{2} O \leq 1.850 ;$ and/or $4.600 \leq \left({SiO}_{2}-7\times {Al}_{2}{O}_{3}-{Li}_{2}O\right) / \left({P}_{2}{O}_{5}+{ZrO}_{2}\right) \leq 5.850 ;$
and/or $2.680 \leq 99 \times \left(CaO+{ZrO}_{2}\right) / \left({Li}_{2}O+{Na}_{2}O+1000\times {K}_{2}O\right) \leq 4.930 ;$
and/or $16.000 \leq \left(5.6\times {B}_{2}{O}_{3}+10\times {Al}_{2}{O}_{3}+6.5\times CaO\right) / {ZrO}_{2} \leq 20.000 .$

8. The 3D curved glass-ceramic according to any one of claims 1 to 7, wherein, at a thickness of 0.6 mm, an optical b-value of the 3D curved glass-ceramic is ≤ 1.00, preferably the optical b-value is ≤ 0.70, and more preferably the optical b-value is ≤ 0.55.

9. The 3D curved glass-ceramic according to any one of claims 1 to 8, wherein, at the thickness of 0.6 mm, a difference between a maximum b-value and a minimum b-value measured at nine locations on a main surface of the 3D curved glass-ceramic is ≤ 0.30, preferably the difference between the maximum b-value and the minimum b-value measured at nine locations on the main surface is ≤ 0.10, and more preferably the difference between the maximum b-value and the minimum b-value measured at nine locations on the main surface is ≤ 0.06;
wherein the nine locations are respectively: (1) four locations corresponding to test circles I close to four corners of the main surface; (2) four locations corresponding to test circles II each centered at points on line segments connecting centers of the four test locations of test circles I, the points being closest to midpoints of long sides or short sides of the main surface; (3) one location corresponding to test circle III centered at a center point of the main surface.

10. The 3D curved glass-ceramic according to any one of claims 1 to 9, wherein, when the thickness of the 3D curved glass-ceramic is 0.6 mm, a haze is ≤ 0.20%, and at a wavelength of 550 nm, a transmittance of the glass-ceramic is ≥ 90.00%.

11. A base glass, which can be used to prepare the 3D curved glass-ceramic according to any one of claims 1 to 10, wherein, based on the mole percentage of oxides, the composition of the base glass comprises:
SiO₂: 60.00 mol% to 71.00 mol%, Al₂O₃: 1.50 mol% to 5.00 mol%, P₂O₅: 0.80 mol% to 1.50 mol%, ZrO₂: 2.00 mol% to 4.00 mol%, Na₂O: 0.00 mol% to 1.00 mol%, K₂O: 0.00 mol% to 0.50 mol%, Li₂O: 20.00 mol% to 30.00 mol%, CaO: 0.00 mol% to 1.60 mol%, and B₂O₃: 0.00 mol% to 1.00 mol%;
based on the content expressed as the mole percentage of each oxide in the composition of the base glass, the composition of the base glass satisfies: $0.180 \leq 5 \times {P}_{2} {O}_{5} / \left({Li}_{2}O+0.5\times {Al}_{2}{O}_{3}\right) \leq 0.250 ;$ $18.200 \leq {Li}_{2} O / {P}_{2} {O}_{5} \leq 25.500 ;$ $0.100 \leq {P}_{2} {O}_{5} \times \left(CaO+{ZrO}_{2}+{Li}_{2}O+{Al}_{2}{O}_{3}\right) / \left({Na}_{2}O+{K}_{2}O+{B}_{2}{O}_{3}\right) \leq 2.200 ;$ $1.500 \leq 10 \times \left({ZrO}_{2}+{P}_{2}{O}_{5}\right) / {Li}_{2} O \leq 2.000 ;$ $4.000 \leq \left({SiO}_{2}-7\times {Al}_{2}{O}_{3}-{Li}_{2}O\right) / \left({P}_{2}{O}_{5}+{ZrO}_{2}\right) \leq 6.000 ;$ $2.600 \leq 99 \times \left(CaO+{ZrO}_{2}\right) / \left({Li}_{2}O+{Na}_{2}O+1000\times {K}_{2}O\right) \leq 5.000 ;$ and $12.200 \leq \left(5.6\times {B}_{2}{O}_{3}+10\times {Al}_{2}{O}_{3}+6.5\times CaO\right) / {ZrO}_{2} \leq 20.000 .$

12. The base glass according to claim 11, wherein, as tested by simultaneous thermal analysis, under a protective atmosphere of nitrogen, the base glass is heated from room temperature to 900 °C at a heating rate of 10 °C/min to obtain a heating DSC curve, in which heating DSC curve, at least two exothermic peaks exist, wherein a first exothermic peak temperature T₁ is 600 °C to 730 °C, and a second exothermic peak temperature T₂ is 740 °C to 800 °C, and T₁ and T₂ satisfy a relational expression: 100°C ≥ T₂ - T₁ ≥ 40°C, preferably 80°C ≥ T₂ - T₁ ≥ 50°C.

13. The base glass according to claim 12, wherein, within a temperature range from T_{g} to T₂, an upper precipitation limit temperature Tₘₐₓ (Li₂SiO₃) of the lithium metasilicate crystalline phase and an upper precipitation limit temperature Tₘₐₓ (SiO₂) of the quartz crystalline phase in the base glass are tested, and Tₘₐₓ (Li₂SiO₃) ≥ Tₘₐₓ (SiO₂), wherein T_{g} is a glass transition temperature of the base glass.

14. The base glass according to any one of claims 11 to 13, wherein, based on the mole percentage of oxides, the composition of the base glass comprises:
SiO₂: 67.50 mol% to 71.00 mol%, Al₂O₃: 3.50 mol% to 5.00 mol%, P₂O₅: not less than 0.85 mol% and less than 1.50 mol%, ZrO₂: 2.50 mol% to 3.50 mol%, Na₂O: greater than 0.00 mol% and not greater than 1.00 mol%, K₂O: greater than 0.00 mol% and not greater than 0.50 mol%, Li₂O: 20.00 mol% to 25.00 mol%, CaO: greater than 0.50 mol% and not greater than 1.50 mol%, and B₂O₃: 0.00 mol% to 1.00 mol%.

15. A preparation method for the 3D curved glass-ceramic according to any one of claims 1 to 10, comprising the following steps:
(1) performing heat treatment on the base glass according to any one of claims 11 to 14 to obtain a preformed glass-ceramic product comprising a lithium metasilicate crystalline phase, a lithium disilicate crystalline phase, and a petalite crystalline phase, with a degree of crystallization not less than 60.00 wt%; and
(2) processing the preformed glass-ceramic product obtained in step (1) into a flat glass-ceramic sheet of the required specification size, and performing hot-bending treatment on the obtained flat glass-ceramic sheet to obtain a 3D curved glass-ceramic, wherein the 3D curved glass-ceramic comprises a petalite crystalline phase and a lithium disilicate crystalline phase, and the petalite crystalline phase and the lithium disilicate crystalline phase have a higher weight percentage than other crystalline phases present in the 3D curved glass-ceramic.

16. The preparation method for the 3D curved glass-ceramic according to claim 15, wherein, in step (1), the heat treatment comprises nucleation treatment and crystallization treatment, wherein a temperature of the nucleation treatment is (Tg - 20 °C) to (Tg + 40 °C), a time of the nucleation treatment is 0 min to 6000 min, a temperature of the crystallization treatment is (T₁ - 50 °C) to T₁, a time of the crystallization treatment is 30 min to 6000 min; Tg is the glass transition temperature of the base glass; in step (1), the heating rate during the heat treatment process is 5 °C/min to 15 °C/min.

17. The preparation method for the 3D curved glass-ceramic according to claim 15 or 16, wherein, in step (2), the hot-bending treatment process comprises at least 3 preheating stations, at least 3 hot-pressing stations, and at least 3 cooling stations; a temperature of the preheating stations is 500 °C to 850 °C, a temperature of the hot-pressing stations is 700 °C to 900 °C, a pressure of the hot-pressing stations is 0 MPa to 1 MPa, and a temperature of the cooling stations is 500 °C to 800 °C;
preferably, a working time at each preheating station is 90 s to 360 s, a working time at each hot-pressing station is 90 s to 360 s, and a working time at each cooling station is 90 s to 360 s.

18. A chemically strengthened glass-ceramic, wherein a composition at a center of the chemically strengthened glass-ceramic is the same as the composition of the 3D curved glass-ceramic according to any one of claims 1 to 10, the chemically strengthened glass-ceramic comprises a compressive stress layer region extending from a surface of the chemically strengthened glass-ceramic to a depth of compression, and has tensile stress inside the chemically strengthened glass-ceramic.

19. A glass device, comprising the 3D curved glass-ceramic according to any one of claims 1 to 10 or comprising the chemically strengthened glass-ceramic according to claim 18.

20. An electronic apparatus, comprising the 3D curved glass-ceramic according to any one of claims 1 to 10 or comprising the chemically strengthened glass-ceramic according to claim 18.
